# EUROPEAN PATENT APPLICATION

(11) **EP 2 051 426 A1**
(43) Date of publication of application: **22.04.2009**
(21) Application number: 07792128.6
(22) Date of filing: 07.08.2007
(51) Int. Cl.: H04J 15/00, H04B 7/02, H04B 7/04, H04B 7/12, H04B 7/26

(54) **MULTIANTENNA RADIO TRANSMITTING APPARATUS AND MULTIANTENNA RADIO TRANSMITTING METHOD**

(30) Priority: 08.08.2006 JP 2006216184; 31.01.2007 JP 2007022032
(71) Applicant: Panasonic Corporation, Kadoma-shi Osaka 571-8501 (JP)
(72) Inventor: YUDA, Yasuaki c/o Panasonic Corporation, Chuo-ku, Osaka 540-6207 (JP); HOSHINO, Masayuki c/o Panasonic Corporation, Chuo-ku, Osaka 540-6207 (JP); IMAI, Tomohiro c/o Panasonic Corporation, Chuo-ku, Osaka 540-6207 (JP)
(74) Representative: Grünecker, Kinkeldey, Stockmair & Schwanhäusser Anwaltssozietät
(86) International application number: PCT/JP2007/065459
(87) International publication number: WO 2008/018468

(57) **Abstract**

There are disclosed a multiantenna radio transmitting apparatus and others wherein control information can be transmitted with enhanced reliability while overheads of transport signals being reduced. This apparatus uses a transmission antenna (Tx) (119) to SDM transmit transport data (1) (CW1) and also uses a transmission antenna (120) to SDM transmit transport data (2) (CW2). In this apparatus, when the transmission quality of the transmission antenna (Tx) (119) is better than that of the transmission antenna (Tx) (120), the control information (2) related to the transport data (2) (CW2) is transmitted in a space division multiplex mode via the transmission antenna (Tx) (119), while the control information (1) related to the transport data (1) (CW1) is transmitted in a diversity mode.

## Description

### Technical Field

The present invention relates to a multiantenna radio transmitting apparatus and multiantenna radio transmitting method used in a communication system that includes a plurality of antennas, and more particularly to a multiantenna radio transmitting apparatus and multiantenna radio transmitting method used in an SDM (Spatial Division Multiplexing) MIMO (Multiple-Input Multiple-Output) system.

### Background Art

In recent years, many technologies for implementing high-speed, high-capacity communications have been investigated by 3GPP RAN LTE (3rd Generation Partnership Project Long Term Evolution). There are, for example, such technologies as OFDM (Orthogonal Frequency Division Multiplexing), which is tolerant of multipath interference in a mobile communication system, AMC (Adaptive Modulation and Coding), in which the coding method and coding rate are changed according to propagation path quality subject to fading fluctuation, frequency scheduling, in which an OFDM band is divided into a plurality of RBs (Resource Blocks) and a transmit packet is assigned with priority to an RB with a good propagation path status, Hybrid Automatic Repeat Request (HARQ), in which retransmission is performed efficiently by combining a coding technology and retransmission technology, and MIMO, in which communication is performed using a plurality of antennas at transmitting and receiving apparatuses.

With the above technologies, control information is transmitted using a control channel between transmitting and receiving apparatuses. For example, in a communication system in which Adaptive Modulation and Coding is performed, control information indicating the modulation method and coding rate is transmitted using a control channel. A downlink control channel related technology proposed by 3GPP LTE is disclosed in Non-patent Document 1. According to the control channel configuration described in Non-patent Document 1, per-user RB assignment information is transmitted as Cat.1 control information using a common control channel common to all users, and each user's transmit signal and transmitting antenna related control information are transmitted as Cat.2 control information and Cat.3 control information, respectively, using a dedicated control channel in each user's RB.

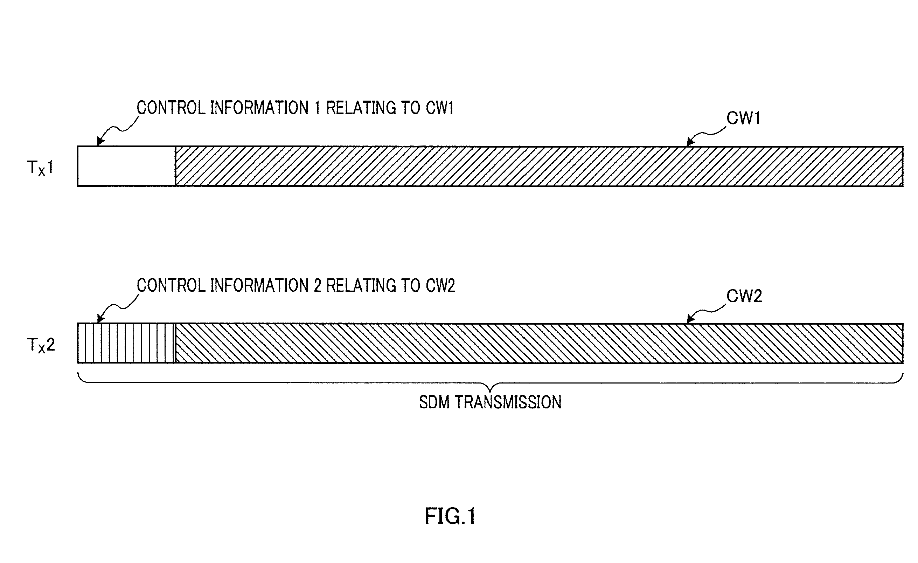

SDM technology, whereby a different signal is transmitted from each transmitting antenna in order to improve the transmission capacity, has been investigated for an above-mentionedMIMO system. An important element in SDM is MCW (Multiple Code Word), whereby an individual coding-unit signal is transmitted from each transmitting antenna. Here, CW (Code Word) indicates a coding unit, and in a MIMO system that uses MCW technology the modulation method, coding rate, and retransmission control differ for each CW, making it necessary to transmit Cat.2 control information and Cat.3 control information for all CWs. As a method of transmitting each CW and control information (Cat.2 control information and Cat.3 control information), there is a method of performing SDM transmission of its own CW and control information from each transmitting antenna, as shown in FIG.1. FIG.1 shows a case by way of example in which a MIMO radio transmitting apparatus is equipped with two transmitting antennas (Tx1 and Tx2) and transmits two CWs (CW1 and CW2), and SDM transmission of control information 1 relating to CW1 and control information 2 relating to CW2 is performed. However, since total transmission power in a base station is fixed, according to the control information SDM transmission method shown in this drawing, transmission power per antenna decreases, and furthermore control information transmitted by a low-quality transmitting antenna has a tendency to be erroneous due to interference between the SDM-transmitted streams. Therefore, a MIMO radio receiving apparatus may not be able to demodulate and decode a CW correctly.

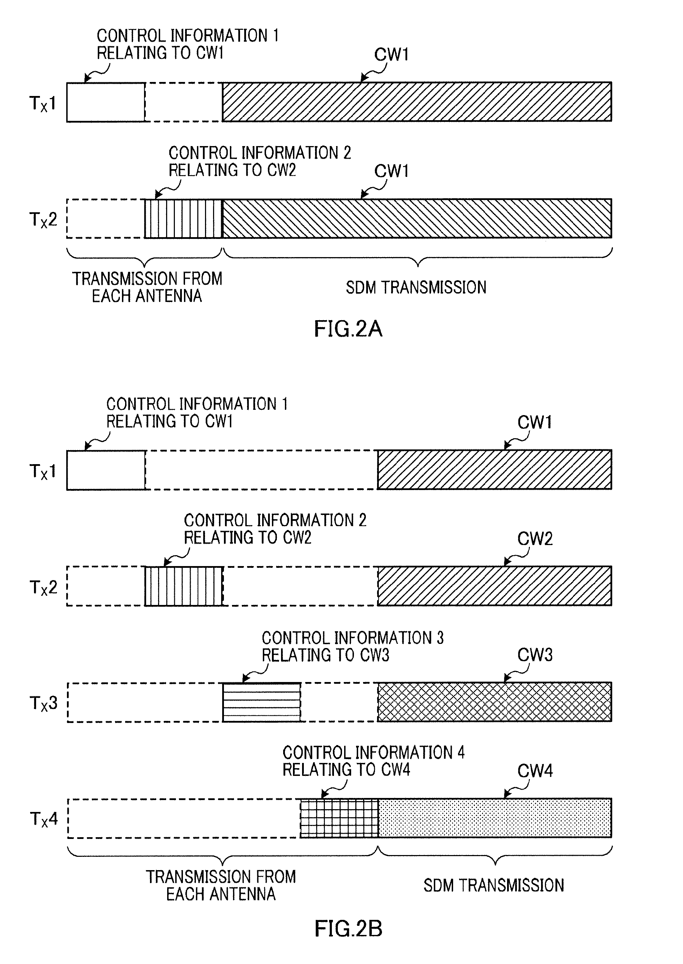

A control information transmitting method that enables the error rate to be lowered is shown in FIG.2A and FIG.2B. FIG.2A illustrates a case in which a MIMO radio transmitting apparatus is equipped with two transmitting antennas (Tx1 and Tx2), and FIG.2B illustrates a case in which a MIMO radio transmitting apparatus is equipped with four transmitting antennas (Tx1 through Tx4) and transmits four CWs (CW1 through CW4). As shown in FIG.2A and FIG.2B, each transmitting antenna transmits control information 1 through 4 relating to all the CWs as overhead. Therefore, control information relating to all the CWs can be transmitted more dependably than with the kind of control information SDM transmission method shown in FIG.1.
Non-patent Document 1: Ericsson NTT DoCoMo, 3GPP R1-060573

### Disclosure of Invention

### Problems to be Solved by the Invention

However, in an SDM MIMO system, a problem with a method whereby control information relating to all the CWs is transmitted as overhead, as described above, is that, as the number of transmitting antennas and the number of SDM-transmitted CWs increase, overhead including control information increases and transmission capacity decreases.

The present invention has been implemented taking into account the problem described above, and it is an object of the present invention to provide a multiantenna radio transmitting apparatus and multiantenna radio transmitting method that enable control information to be transmitted more dependably while reducing transmit signal overhead in a multiantenna radio communication system.

### Means for Solving the Problems

A multiantenna radio transmitting apparatus of the present invention is equipped with a first antenna that performs space division multiplex transmission of first data and a second antenna that performs space division multiplex transmission of second data, and employs a configuration in which the first antenna has better transmission quality than the second antenna, the first antenna performs space division multiplex transmission of second control information relating to the second data, and at least one of the first antenna and the second antenna transmits first control information relating to the first data without performing space division multiplexing.

A multiantenna radio transmitting method of the present invention is a multiantenna radio transmitting method used in a radio transmitting apparatus equipped with a first antenna that performs space division multiplex transmission of first data and a second antenna that performs space division multiplex transmission of second data, in which the first antenna has better transmission quality than the second antenna, second control information relating to the second data is transmitted by space division multiplex transmission from the first antenna, and first control information relating to the first data is transmitted without space division multiplexing being performed from at least one of the first antenna and the second antenna.

### Advantageous Effect of the Invention

The present invention enables control information to be transmitted more dependably while reducing transmit signal overhead in a multiantenna radio communication system in which communication is performed using a plurality of antennas.

### Brief Description of Drawings

FIG.1 is a drawing showing a conventional control information transmitting method;
FIG.2A is a drawing showing a conventional control information transmitting method;
FIG.2B is a drawing showing a conventional control information transmitting method;
FIG.3 is a block diagram showing the main configuration of a MIMO radio transmitting apparatus according to Embodiment 1 of the present invention;
FIG.4 is a drawing for explaining a control information and transmit data transmitting method in a MIMO radio transmitting apparatus according to Embodiment 1 of the present invention;
FIG.5 is a flowchart showing a processing procedure for transmitting control information in a MIMO radio transmitting apparatus according to Embodiment 1 of the present invention;
FIG.6 is a block diagram showing the main configuration of a MIMO radio receiving apparatus according to Embodiment 1 of the present invention;
FIG.7 is a flowchart showing a processing procedure for receiving control information and transmit data in a MIMO radio receiving apparatus according to Embodiment 1 of the present invention;
FIG.8 is a block diagram showing the main configuration of a MIMO radio transmitting apparatus according to Embodiment 2 of the present invention;
FIG.9 is a drawing for explaining a control information and transmit data transmitting method in a MIMO radio transmitting apparatus according to Embodiment 2 of the present invention;
FIG.10 is a block diagram showing the main configuration of a MIMO radio transmitting apparatus according to Embodiment 3 of the present invention;
FIG.11 is a drawing for explaining a control information and transmit data transmitting method in a MIMO radio transmitting apparatus according to Embodiment 3 of the present invention;
FIG.12 is a flowchart showing a processing procedure for transmitting control information in a MIMO radio transmitting apparatus according to Embodiment 3 of the present invention;
FIG.13 is a block diagram showing the main configuration of a MIMO radio receiving apparatus according to Embodiment 3 of the present invention;
FIG.14 is a drawing showing a method of performing SDM transmission via a 2-rankings-higher transmitting antenna of control information corresponding to each transmitting antenna according to Embodiment 3 of the present invention;
FIG.15 is a block diagram showing the main configuration of a MIMO radio transmitting apparatus according to Embodiment 4 of the present invention;
FIG.16 is a drawing for explaining a control information and transmit data transmitting method in a MIMO radio transmitting apparatus according to Embodiment 4 of the present invention;
FIG.17 is a block diagram showing the main configuration of a MIMO radio receiving apparatus according to Embodiment 4 of the present invention;
FIG.18 is a block diagram showing the main configuration of a MIMO radio transmitting apparatus according to Embodiment 5 of the present invention;
FIG.19 is a drawing for explaining a control information and transmit data transmitting method in a MIMO radio transmitting apparatus according to Embodiment 5 of the present invention;
FIG.20 is a block diagram showing the main configuration of a MIMO radio receiving apparatus according to Embodiment 5 of the present invention;
FIG.21 is a drawing for explaining a control information and transmit data transmitting method in a MIMO radio transmitting apparatus according to Embodiment 6 of the present invention;
FIG.22 is a block diagram showing the main configuration of a MIMO radio transmitting apparatus according to Embodiment 6 of the present invention;
FIG.23 is a block diagram showing the main configuration of a MIMO radio receiving apparatus according to Embodiment 6 of the present invention;
FIG.24 is a drawing for explaining a control information and transmit data transmitting method in a MIMO radio transmitting apparatus according to Embodiment 7 of the present invention;
FIG.25 is a drawing for explaining a control information and transmit data transmitting method in a MIMO radio transmitting apparatus according to Embodiment 8 of the present invention;
FIG.26 is a block diagram showing the main configuration of a MIMO radio transmitting apparatus according to Embodiment 8 of the present invention;
FIG. 27 is a flowchart showing a processing procedure for transmitting control information in a MIMO radio transmitting apparatus according to Embodiment 8 of the present invention;
FIG.28 is a block diagram showing the main configuration of a MIMO radio receiving apparatus according to Embodiment 8 of the present invention; and
FIG.29 is a flowchart showing a processing procedure for receiving control information and transmit data in a MIMO radio receiving apparatus according to Embodiment 8 of the present invention.

### Best Mode for Carrying Out the Invention

Embodiments of the present invention will now be described in detail with reference to the accompanying drawings.

### (Embodiment 1)

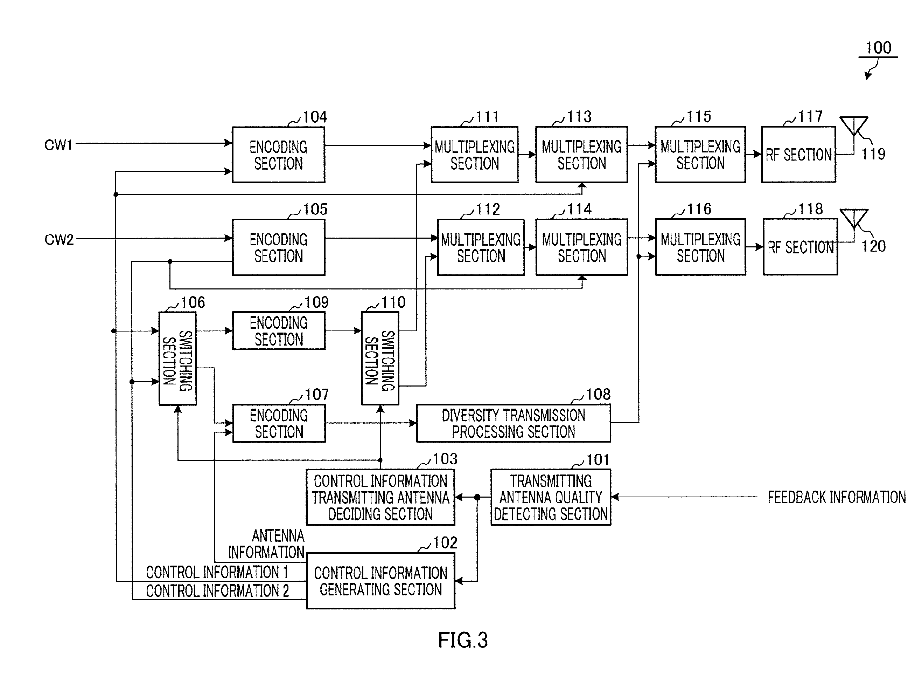

FIG.3 is a block diagram showing the main configuration of MIMO radio transmitting apparatus 100 according to Embodiment 1 of the present invention. Here, a case will be described by way of example in which MIMO radio transmitting apparatus 100 is equipped with two antennas as a multiantenna radio transmitting apparatus, and performs SDM communication.

MIMO radio transmitting apparatus 100 is equipped with transmitting antenna quality detecting section 101, control information generating section 102, control information transmitting antenna deciding section 103, encoding sections 104 and 105, switching section 106, encoding section 107, diversity transmission processing section 108, encoding section 109, switching section 110, multiplexing sections 111 and 112, modulation sections 113 and 114, multiplexing sections 115 and 116, RF sections 117 and 118, and transmitting antennas 119 and 120. CW1 and CW2 are input to MIMO radio transmitting apparatus 100 as transmit data, and a CQI indicating the transmission quality of each transmitting antenna is fed back as feedback information from MIMO radio receiving apparatus 200 described later herein. CW1, encoding section 104, multiplexing section 111, modulation section 113, multiplexing section 115, and RF section 117 correspond to transmitting antenna 119, and CW2, encoding section 105, multiplexing section 112, modulation section 114, multiplexing section 116, and RF section 118 correspond to transmitting antenna 120.

The sections of MIMO radio transmitting apparatus 100 perform the following operations.

Transmitting antenna quality detecting section 101 detects the transmission quality of transmitting antenna 119 and transmitting antenna 120 based on information such as a CQI fed back from MIMO radio receiving apparatus 200 described later herein, and outputs this transmission quality information to control information generating section 102 and control information transmitting antenna deciding section 103. Here, a CQI is information indicating reception quality, and is determined based on a reception SINR, reception SNR, reception CNR, received power, or the like, for example. Transmission quality is the quality of a propagation path as seen from the transmitting side, estimated based on reception quality information such as a fed-back CQI.

Control information generating section 102 decides upon a modulation method and coding rate for CW1 based on the transmission quality of transmitting antenna 119 input from transmitting antenna quality detecting section 101, generates control information 1 including information relating to the decided modulation method and coding rate, and outputs this control information 1 to encoding section 104, modulation section 113, and switching section 106. Control information generating section 102 also decides upon a modulation method and coding rate for CW2 based on the transmission quality of transmitting antenna 120 input from transmitting antenna quality detecting section 101, generates control information 2 including information relating to the decided modulation method and coding rate, and outputs this control information 2 to encoding section 105, modulation section 114, and switching section 106. Below, control information 1 is also referred to as control information corresponding to transmitting antenna 119, and control information 2 is also referred to as control information corresponding to transmitting antenna 120. Control information generating section 102 also generates antenna information relating to transmitting antennas 119 and 120, and outputs this information to encoding section 107.

Control information transmitting antenna deciding section 103 decides upon the transmitting antenna with better transmission quality as a control information transmitting antenna based on transmitting antenna 119 and transmitting antenna 120 transmission quality input from transmitting antenna quality detecting section 101, and outputs the decision result to switching section 106 and switching section 110. Here, a transmitting antenna with better transmission quality is a transmitting antenna with good propagation path quality as seen from the transmitting side. In the following description, a case will be described by way of example in which transmitting antenna 119 is decided upon as the control information transmitting antenna.

Encoding sections 104 and 105 execute processing such as turbo encoding or convolutional encoding respectively on CW1 and CW2 input to MIMO radio transmitting apparatus 100, using the coding rates indicated respectively by control information 1 and control information 2 input from control information generating section 102, and output the obtained encoded parameters to multiplexing sections 111 and 112 respectively.

Of control information 1 and control information 2 input from control information generating section 102, switching section 106 outputs control information (in this example, control information 1) corresponding to the control information transmitting antenna (in this example, transmitting antenna 119) to encoding section 107, and outputs control information (in this example, control information 2) corresponding to the transmitting antenna other than the control information transmitting antenna (in this example, transmitting antenna 120) to encoding section 109.

Encoding section 107 executes processing such as turbo encoding or convolutional encoding on control information (in this example, control information 1) input from switching section 106 and antenna information input from control information generating section 102, using a predetermined coding rate, and outputs an obtained encoded parameter to diversity transmission processing section 108.

Diversity transmission processing section 108 signal processing for performing diversity transmission on encoded parameters (in this example, control information 1 and antenna information encoded parameters) input from encoding section 107, and outputs an obtained diversity transmission signal to multiplexing section 115 and multiplexing section 116. Below, control information corresponding to a control information transmitting antenna is also referred to as diversity-transmitted control information.

Encoding section 109 executes processing such as turbo encoding or convolutional encoding on control information (in this example, control information 2) input from switching section 106, and outputs an obtained encoded parameter to switching section 110. Encoding section 109 incorporates a table that associates a coding rate for transmit data encoding with a coding rate for control information encoding. Encoding section 109 references the incorporated table using the CW2 coding rate indicated by control information (in this example, control information 2) input from switching section 106, decides upon a coding rate for encoding processing in encoding section 109, and uses this decided coding rate in control information encoding processing.

Switching section 110 outputs an encoded parameter input from encoding section 109 (in this example, a control information 2 encoded parameter) to the multiplexing section, of multiplexing section 111 and multiplexing section 112, corresponding to the control information transmitting antenna (in this example, multiplexing section 111). Switching section 110 switches the above output destination based on a decision result input from control information transmitting antenna deciding section 103.

Of multiplexing sections 111 and 112, the multiplexing section (in this example, multiplexing section 111) corresponding to the control information transmitting antenna (in this example, transmitting antenna 119) multiplexes an encoded parameter (in this example, a control information 2 encoded parameter) input from switching section 110 and an encoded parameter (in this example, a CW1 encoded parameter) input from the encoding section (in this example, encoding section 104) corresponding to the control information transmitting antenna, and outputs an obtained multiplex signal to the modulation section (in this example, modulation section 113) corresponding to the control information transmitting antenna. Here, a multiplex signal output from multiplexing section 111 to modulation section 113 is an SDM transmit signal that is SDM-transmitted via transmitting antenna 119. Below, control information (in this example, control information 2) corresponding to a transmitting antenna other than a control information transmitting antenna is also referred to as SDM-transmitted control information.

Meanwhile, of multiplexing sections 111 and 112, the multiplexing section (in this example, multiplexing section 112) corresponding to the transmitting antenna (in this example, transmitting antenna 120) other than the control information transmitting antenna outputs an encoded parameter (in this example, a CW2 encoded parameter) input from the encoding section (in this example, encoding section 105) corresponding to the transmitting antenna other than the control information transmitting antenna directly to the modulation section (in this example, modulation section 114) corresponding to the transmitting antenna other than the control information transmitting antenna. Here, a multiplex signal output from multiplexing section 112 to modulation section 114 is an SDM transmit signal that is SDM-transmitted via transmitting antenna 120.

Modulation sections 113 and 114 execute modulation processing respectively on SDM transmit signals input from multiplexing sections 111 and 112 respectively, using a modulation method such as QPSK or 16QAM indicated by control information 1 and control information 2 input from control information generating section 102, and output the obtained modulated signals to multiplexing sections 115 and 116 respectively.

Multiplexing sections 115 and 116 multiplex modulated signals input from modulation sections 113 and 114 respectively and a diversity transmission signal input from diversity transmission processing section 108, and output the obtained multiplex transmit signals to RF sections 117 and 118 respectively.

RF sections 117 and 118 perform up-conversion processing on the multiplex transmit signals input from multiplexing sections 115 and 116 respectively, and the up-converted transmit signals are transmitted via transmitting antennas 119 and 120 respectively.

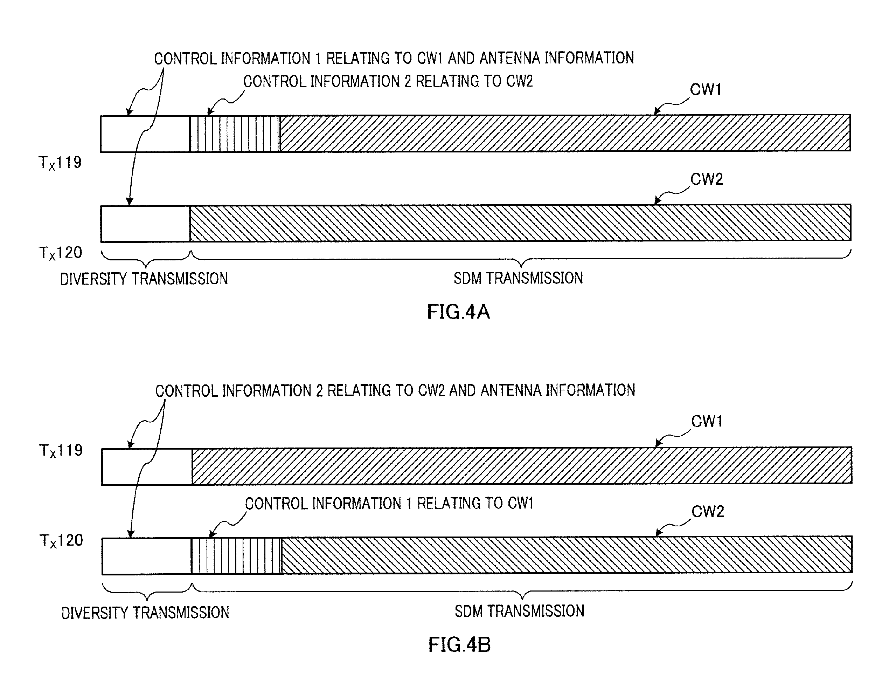

FIG.4 is a drawing for explaining the control information and transmit data transmitting method inMIMO radio transmitting apparatus 100. FIG.4A illustrates a case in which the transmission quality of transmitting antenna 119 (Txl19) is better than that of transmitting antenna 120 (Tx120), and transmitting antenna 119 is decided upon as a control information transmitting antenna. FIG.4B illustrates a case in which the transmission quality of transmitting antenna 120 is better than that of transmitting antenna 119, and transmitting antenna 120 is decided upon as a control information transmitting antenna.

As shown in FIG.4A, when transmitting antenna 119 is decided upon as the control information transmitting antenna, MIMO radio transmitting apparatus 100 performs diversity transmission of CW1 related control information 1 and antenna information. Also, MIMO radio transmitting apparatus 100 multiplexes control information 2 and CW1 and performs SDM transmission thereof via transmitting antenna 119, and performs SDM transmission of CW2 via transmitting antenna 120.

As shown in FIG.4B, when transmitting antenna 120 is decided upon as the control information transmitting antenna, MIMO radio transmitting apparatus 100 performs diversity transmission of CW2 relatedcontrol information 2 and antenna information. Also, MIMO radio transmitting apparatus 100 multiplexes control information 1 and CW2 and performs SDM transmission thereof via transmitting antenna 120, and performs SDM transmission of CW1 via transmitting antenna 119.

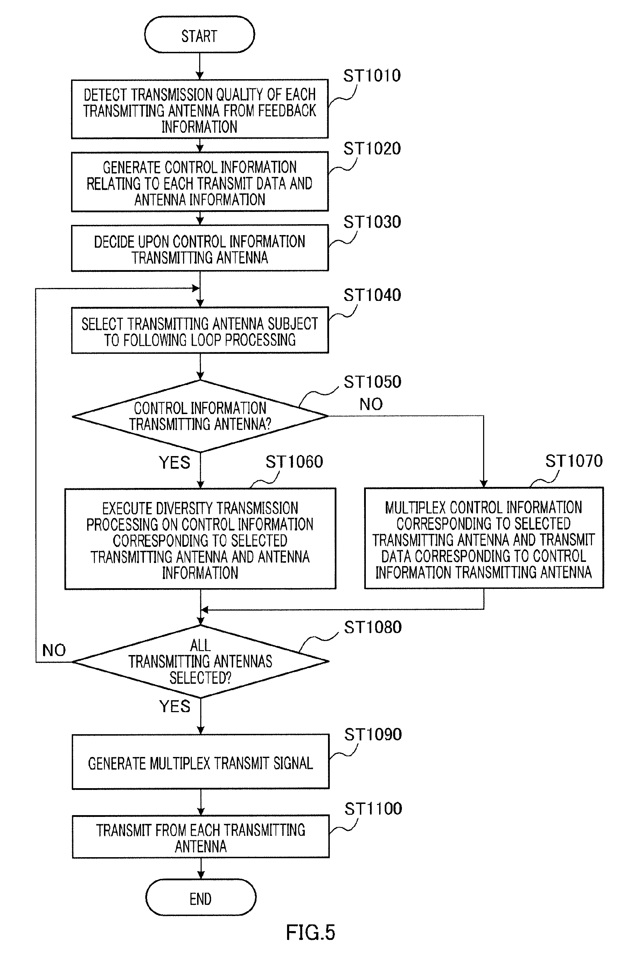

FIG.5 is a flowchart showing the processing procedure for transmitting control information in MIMO radio transmitting apparatus 100.

First, transmitting antenna quality detecting section 101 detects the transmission quality of transmitting antenna 119 and transmitting antenna 120 using information such as a CQI fed back from MIMO radio receiving apparatus 200 (ST1010).

Next, control information generating section 102 decides upon a modulation method and coding rate for CW1 and CW2 based on the transmission quality of transmitting antennas 119 and 120 detected by transmitting antenna quality detecting section 101. Then control information generating section 102 generates control information 1 including information relating to the modulation method and coding rate for CW1, control information 2 including information relating to the modulation method and coding rate for CW2, and antenna information relating to transmitting antennas 119 and 120 (ST1020).

Next, based on the transmission quality of transmitting antennas 119 and 120 detected by transmitting antenna quality detecting section 101, control information transmitting antenna deciding section 103 decides upon the transmitting antenna with the better transmission quality (in this example, transmitting antenna 119) as a control information transmitting antenna (ST1030).

Then MIMO radio transmitting apparatus 100 selects a transmitting antenna to be subjected to loop processing comprising ST1040 through ST1080. As an initial value, transmitting antenna 119 is subjected to the loop processing comprising ST1040 through ST1080. In each loop, MIMO radio transmitting apparatus 100 selects the next antenna after the transmitting antenna selected the previous time, and makes that antenna subj ect to processing (ST1040).

Next, MIMO radio transmitting apparatus 100 determines whether or not the transmitting antenna subject to processing is the control information transmitting antenna (ST1050).

If the transmitting antenna subject to processing (for example, transmitting antenna 119) is determined to be the control information transmitting antenna (ST1050: YES), diversity transmission processing section 108 performs signal processing to perform diversity transmission for control information corresponding to the control information transmitting antenna (in this example, control information 1) and antenna information, and generates a diversity transmission signal (ST1060).

If the transmitting antenna subject to processing (for example, transmitting antenna 120) is determined not to be the control information transmitting antenna (in this example, transmitting antenna 119) (ST1050: NO), a modulation section (in this example, multiplexing section 111) corresponding to the control information transmitting antenna multiplexes control information (in this example, control information 2) corresponding to a transmitting antenna other than the control information transmitting antenna, and transmit data (in this example, CW1) corresponding to the control information transmitting antenna, and generates an SDM transmit signal (ST1070).

Next, MIMO radio transmitting apparatus 100 determines whether or not all the transmitting antennas have been selected as subject to processing (ST1080). If it is determined that all the transmitting antennas have not been selected as subject to processing (ST1080: NO), the processing procedure returns to ST1040. On the other hand, if it is determined that all the transmitting antennas have been selected as subject to processing (ST1080: YES), the processing procedure proceeds to ST1090.

Then each transmitting antenna (in this example, each of transmitting antennas 119 and 120) multiplexes a diversity transmission signal generated in ST1060 and an SDM transmit signal generated in ST1070, and generates a multiplex transmit signal (ST1090).

Next, each transmitting antenna (in this example, each of transmitting antennas 119 and 120) transmits a multiplex transmit signal including respective control information (ST1100).

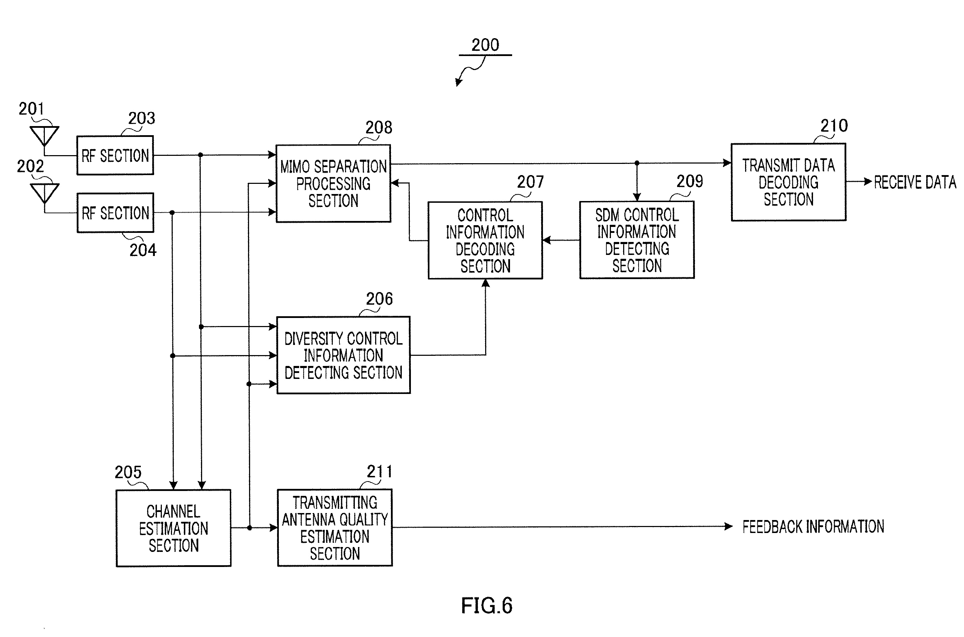

FIG.6 is a block diagram showing the main configuration of MIMO radio receiving apparatus 200 according to this embodiment.

MIMO radio receiving apparatus 200 is equipped with receiving antennas 201 and 202, RF sections 203 and 204, channel estimation section 205, diversity control information detecting section 206, control information decoding section 207, MIMO separation processing section 208, SDM control information detecting section 209, transmit data decoding section 210, and transmitting antenna quality estimation section 211.

The sections of MIMO radio receiving apparatus 200 perform the following operations.

Receiving antennas 201 and 202 receive signals transmitted from MIMO radio transmitting apparatus 100, and output the received signals to RF sections 203 and 204 respectively.

RF sections 203 and 204 execute down-conversion processing on received signals input from receiving antennas 201 and 202 respectively, and output the resulting signals to channel estimation section 205, MIMO separation processing section 208, and diversity control information detecting section 206.

Channel estimation section 205 performs channel estimation using the received signals down-converted by RF sections 203 and 204, and outputs an obtained channel estimate to diversity control information detecting section 206, MIMO separation processing section 208, and transmitting antenna quality estimation section 211.

Based on a channel estimate input from channel estimation section 205, diversity control information detecting section 206 performs diversity reception processing - for example, STBC reception processing - on the received signals down-converted by RF sections 203 and 204, detects diversity-transmitted control information (in this example, control information 1) and antenna information, and outputs this information to control information decoding section 207.

Control information decoding section 207 executes decoding processing on control information (in this example, control information 1) detected by diversity control information detecting section 206, antenna information, or control information (in this example, control information 2) detected by SDM control information detecting section 209, and outputs the result to MIMO separation processing section 208.

Using the received signals down-converted by RF sections 203 and 204, the channel estimate input from channel estimation section 205, and control information (in this example, control information 1, control information 2, and antenna information) input from control information decoding section 207, MIMO separation processing section 208 separates an SDM transmit signal transmitted by each transmitting antenna, and outputs the signals to SDM control information detecting section 209 and transmit data decoding section 210. MIMO separation processing methods include, for example, space filtering and SIC (Successive Interference Cancellation).

SDM control information detecting section 209 detects control information (in this example, control information 2) corresponding to a transmitting antenna other than the control information transmitting antenna from an SDM transmit signal input from MIMO separation processing section 208, and outputs this to control information decoding section 207.

Transmit data decoding section 210 detects transmit data (in this example, CW1 and CW2) from the SDM transmit signal input fromMIMO separation processing section 208, executes decoding processing, and outputs the obtained receive data.

Using a channel estimate input from channel estimation section 205, transmitting antenna quality estimation section 211 estimates the transmission quality of transmitting antennas 119 and 120 of MIMO radio transmitting apparatus 100, and feeds back information such as a CQI representing the estimation result to MIMO radio transmitting apparatus 100.

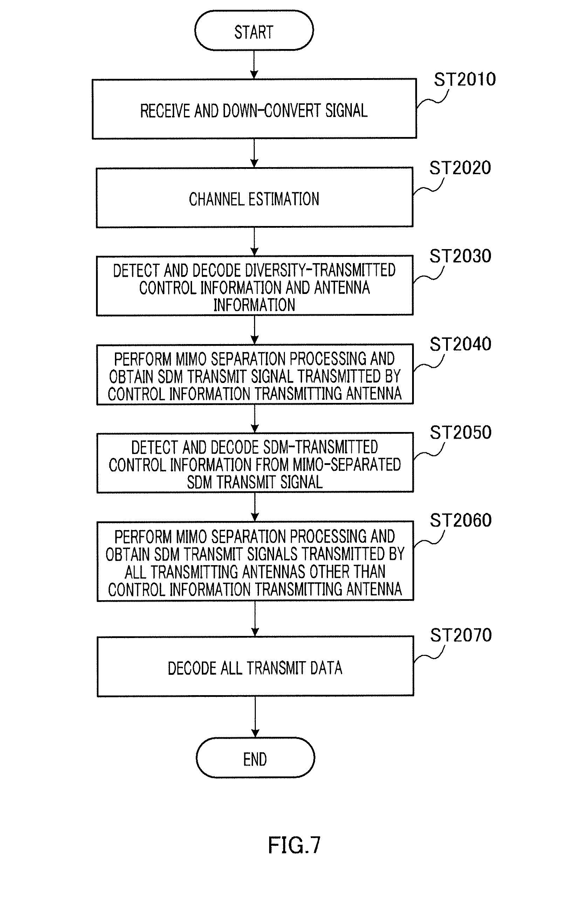

FIG.7 is a flowchart showing the processing procedure for receiving control information and transmit data in MIMO radio receiving apparatus 200.

Receiving antennas 201 and 202 receive signals transmitted from MIMO radio transmitting apparatus 100, and RF sections 203 and 204 execute down-conversion processing on the received signals received by receiving antennas 201 and 202 respectively (ST2010).

Next, channel estimation section 205 performs channel estimation using the down-converted received signals (ST2020).

Then, using a channel estimate, diversity control information detecting section 206 detects diversity-transmitted control information (in this example, control information 1) and antenna information from within the down-converted received signals. The detected control information and antenna information is decoded by control information decoding section 207 (ST2030).

Next, MIMO separation processing section 208 performs MIMO separation processing using the diversity-transmitted control information (in this example, control information 1) and antenna information, and obtains an SDM transmit signal transmitted by the control information transmitting antenna (in this example, transmitting antenna 119) (ST2040).

Then SDM control information detecting section 209 detects SDM-transmitted control information (in this example, control information 2) from the SDM transmit signal transmitted by the control information transmitting antenna (in this example, transmitting antenna 119). The detected control information is decoded by control information decoding section 207 (ST2050).

Next, using the SDM-transmitted control signal, MIMO separation processing section 208 separates all SDM transmit signals transmitted by a transmitting antenna (in this example, transmitting antenna 120) other than the control information transmitting antenna (ST2060).

Then transmit data decoding section 210 performs decoding processing on all the SDM transmit signals (ST2070).

Thus, according to this embodiment, a MIMO radio transmitting apparatus decides upon a transmitting antenna with better transmission quality as a control information transmitting antenna, and using the decided control information transmitting antenna performs SDM transmission of control information corresponding to another transmitting antenna, and performs diversity transmission of control information corresponding to the control information transmitting antenna. This enables all control information to be transmitted dependably with little susceptibility to error while reducing transmit signal overhead.

In this embodiment, a case has been described by way of example in which control information corresponding to a control information transmitting antenna is diversity-transmitted in order to transmit it more dependably. However, control information corresponding to the transmitting antenna with the best transmission quality may also be performed using another more dependable transmitting method than SDM transmission. Here, transmitting control information more dependably includes reducing the transmission error rate. That is to say, another transmitting method with a lower error rate than SDM transmission may be used.

Diversity transmission methods here include space diversity such as STBC (Space Time Block Coding), directional diversity, frequency diversity, time diversity, and so forth. In diversity transmission, a plurality of transmitting antennas may be used, or a single transmitting antenna may be used. In this embodiment, a case has been described by way of example in which control information corresponding to a control information transmitting antenna is diversity-transmitted using all transmitting antennas. However, diversity transmission may be performed using only one control information transmitting antenna. In this case, MIMO radio transmitting apparatus 100 can decide upon a control information transmitting antenna using feedback information fed back from MIMO radio receiving apparatus 200, and MIMO radio receiving apparatus 200 can identify a control information transmitting antenna from transmitting antenna quality shared with MIMO radio transmitting apparatus 100. Therefore, diversity transmission processing can be performed with simple processing, and control information can be transmitted dependably with little susceptibility to error.

Furthermore, a single fixed transmitting antenna may be decided upon as a transmitting antenna that performs diversity transmission of control information. In this case, since control information is diversity-transmitted from a single fixed transmitting antenna without performing spatial multiplexing, a decrease in control information transmission power and inter-antenna interference can be avoided, and control information can be transmitted with little susceptibility to error. Also, in this case, since diversity transmission can be performed without deciding upon or identifying a control information transmitting antenna in either transmission or reception, the configurations of MIMO radio transmitting apparatus 100 and MIMO radio receiving apparatus 200 can be simplified.

In this embodiment, a case has been described by way of example in which control information corresponding to a control information transmitting antenna is diversity-transmitted using each transmitting antenna, and other control information is SDM-transmitted using only one control information transmitting antenna. However, all control information may be diversity-transmitted using a control information transmitting antenna, and an SDM transmission method may be used only for transmit data (CW) transmission.

In this embodiment, a case has been described by way of example in which encoding section 109 incorporates and uses a table that associates a coding rate for transmit data encoding with a coding rate for control information encoding. However, a table may also be incorporated and used that associates transmission quality of a transmitting antenna with a coding rate for control information encoding. In this case, transmitting antenna quality detecting section 101 would input transmitting antenna quality to encoding section 109, and encoding section 109 would reference the incorporated table and decide upon and use a coding rate for encoding processing in encoding section 109. This would allow a coding rate for control information encoding to be changed adaptively, enabling encoding efficiency to be improved.

In this embodiment, a case has been described by way of example in which control information including a modulationmethod and coding rate for each CW is generated adaptively based on information fed back from MIMO radio receiving apparatus 200. However, the present invention is not limited to this, and control information may be input directly from outside MIMO radio transmitting apparatus 100 instead of being generated adaptively.

### (Embodiment 2)

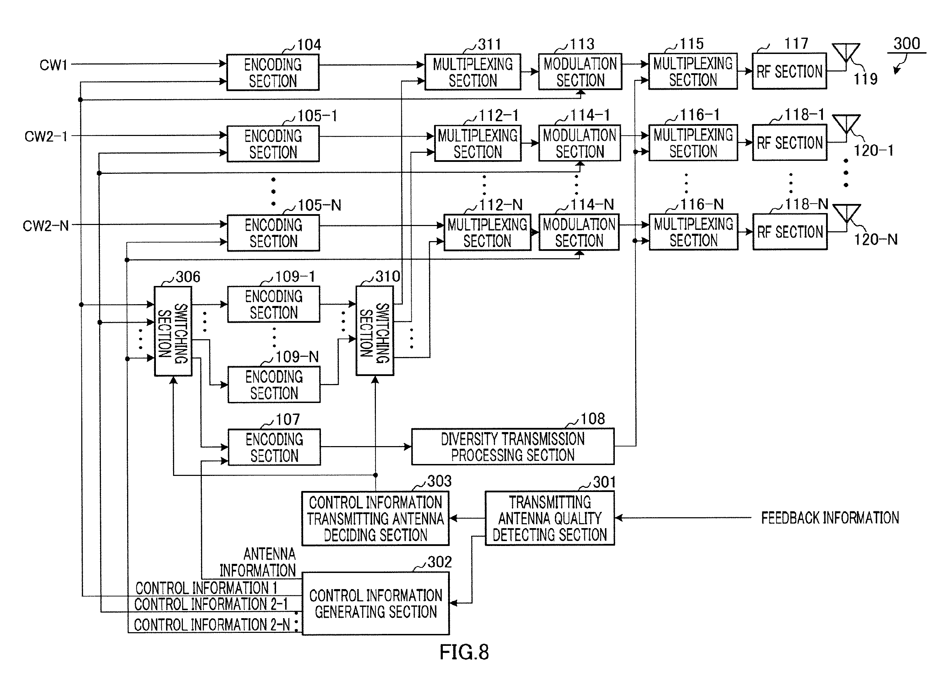

FIG.8 is a block diagram showing the main configuration of MIMO radio transmitting apparatus 300 according to Embodiment 2 of the present invention. MIMO radio transmitting apparatus 300 has the same kind of basic configuration as MIMO radio transmitting apparatus 100 according to Embodiment 1 (see FIG.3), and therefore identical configuration elements are assigned the same reference codes, and descriptions thereof are omitted.

MIMO radio transmitting apparatus 300 differs from MIMO radio transmitting apparatus 100 in that CW1, CW2-1, ..., CW2-N (where N>1) are input as transmit data. MIMO radio transmitting apparatus 300 also differs from MIMO radio transmitting apparatus 100 in being equipped with N each of encoding section 105, multiplexing section 112, modulation section 114, multiplexing section 116, RF section 118, transmitting antenna 120, and encoding section 109. Here, the following reference codes are assigned: encoding sections 105-1 through 105-N, multiplexing sections 112-1 through 112-N, modulation sections 114-1 through 114-N, multiplexing sections 116-1 through 116-N, RF sections 118-1 through 118-N, transmitting antennas 120-1 through 120-N, and encoding sections 109-1 through 109-N. Also, transmitting antenna quality detecting section 301, control information generating section 302, control information transmitting antenna deciding section 303, switching section 306, switching section 310, and multiplexing section 311 of MIMO radio transmitting apparatus 300 have some differences in processing from transmitting antenna quality detecting section 101, control information generating section 102, control information transmitting antenna deciding section 103, switching section 106, switching section 110, and multiplexing section 111 of MIMO radio transmitting apparatus 100, and are assigned different reference codes to indicate these differences.

Transmitting antenna quality detecting section 301 detects the transmission quality of transmitting antennas 119 and 120-1 through 120-N based on information such as a CQI fed back from MIMO radio receiving apparatus 400 described later herein, and outputs this transmission quality information to control information generating section 302 and control information transmitting antenna deciding section 303.

Control information generating section 302 decides upon a modulation method and coding rate for CW1 based on the transmission quality of transmitting antenna 119 input from transmitting antenna quality detecting section 301, generates control information 1 including information relating to the decided modulation method and coding rate, and outputs this control information 1 to encoding section 104, modulation section 113, and switching section 306. Control information generating section 302 also decides upon a modulation method and coding rate for each of CW2-1 through CW2-N based on the transmission quality of transmitting antennas 120-1 through 120-N input from transmitting antenna quality detecting section 301, generates control information 2-1 through 2-N including information relating respectively to the decided modulation methods and coding rates, and outputs this control information to encoding sections 105-1 through 105-N respectively, modulation sections 114-1 through 114-N respectively, and switching section 306. Control information generating section 102 also generates antenna information relating to transmitting antennas 119 and 120-1 through 120-N, and outputs this information to encoding section 107.

Control information transmitting antenna deciding section 303 decides upon the transmitting antenna with the best transmission quality - for example, transmitting antenna 119 - as a control information transmitting antenna based on the transmission quality of transmitting antenna 119 and transmitting antenna 120-1 through 120-N input from transmitting antenna quality detecting section 301, and outputs the decision result to switching section 306 and switching section 310. In the following description, a case will be described by way of example in which transmitting antenna 119 is decided upon as the control information transmitting antenna.

Encoding sections 105-1 through 105-N execute processing such as turbo encoding or convolutional encoding respectively on CW2-1 through CW2-N using the coding rates indicated respectively by control information 2-1 through 2-N input from control information generating section 302, and output the obtained encoded parameters to multiplexing sections 112-1 through 112-N respectively.

Of control information 1 and control information 2-1 through 2-N input from control information generating section 302, switching section 306 outputs control information (in this example, control information 1) corresponding to the control information transmitting antenna to encoding section 107, and outputs control information (in this example, control information 2-1 through 2-N) corresponding to transmitting antennas other than the control information transmitting antenna to encoding sections 109-1 through 109-N respectively.

Encoding sections 109-1 through 109-N execute processing such as turbo encoding or convolutional encoding on control information (in this example, control information 2-1 through 2-N) input from switching section 306, and output obtained encoded parameters to switching section 310.

Switching section 310 outputs encoded parameters input from encoding sections 109-1 through 109-N (in this example, control information 2-1 through 2-N encoded parameters) to the multiplexing section, of multiplexing section 311 and multiplexing sections 112-1 through 112-N, (in this example, multiplexing section 111), corresponding to the control information transmitting antenna (in this example, transmitting antenna 119). Switching section 310 switches the above encoded parameter output destination based on a decision result input from control information transmitting antenna deciding section 303.

Of multiplexing sections 112-1 through 112-N, the multiplexing section (in this example, multiplexing section 311) corresponding to the control information transmitting antenna (in this example, transmitting antenna 119) multiplexes encoded parameters (in this example, control information 2-1 through 2-N encoded parameters) input from switching section 310 and an encoded parameter (in this example, a CW1 encoded parameter) input from the encoding section (in this example, encoding section 104) corresponding to the control information transmitting antenna, and outputs an obtained multiplex signal to the modulation section (in this example, modulation section 113) corresponding to the control information transmitting antenna.

Meanwhile, of multiplexing section 311 and multiplexing sections 112-1 through 112-N, the multiplexing sections (in this example, multiplexing sections 112-1 through 112-N) corresponding to transmitting antennas (in this example, transmitting antennas 120-1 through 120-N) other than the control information transmitting antenna output encoded parameters (in this example, CW2-1 through CW2-N encoded parameters) input from the encoding sections (in this example, encoding sections 105-1 through 105-N) corresponding to transmitting antennas other than the control information transmitting antenna directly to the modulation sections (in this example, modulation sections 114-1 through 114-N) corresponding to transmitting antennas other than the control information transmitting antenna.

Modulation sections 114-1 through 114-N execute modulation processing respectively on multiplex signals input from multiplexing sections 112-1 through 112-N, using a modulation method such as QPSK or 16QAM indicated by control information 2-1 through 2-N respectively input from control information generating section 302, and output the obtained modulated signals to multiplexing sections 116-1 through 116-N respectively.

Multiplexing sections 116-1 through 116-N multiplex modulated signals input from modulation sections 114-1 through 114-N respectively and a diversity transmission signal input from diversity transmission processing section 108, and output the obtained multiplex transmit signals to RF sections 118-1 through 118-N respectively.

RF sections 118-1 through 118-N perform up-conversion processing on the multiplex transmit signals input from multiplexing sections 116-1 through 116-N respectively. The up-converted transmit signals are transmitted via transmitting antennas 120-1 through 120-N respectively.

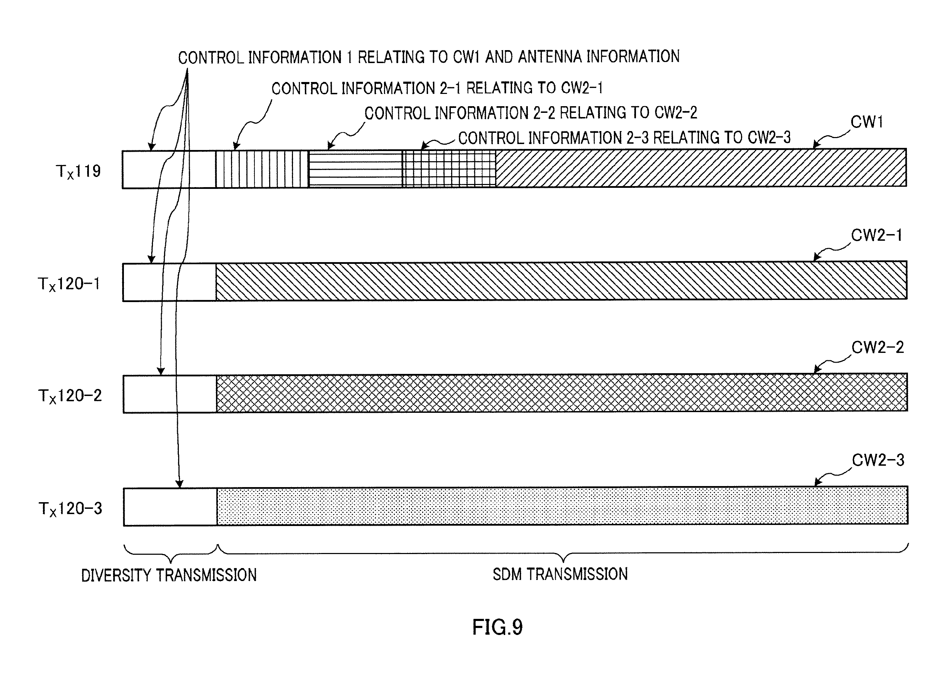

FIG.9 is a drawing for explaining the control information and transmit data transmitting method in MIMO radio transmitting apparatus 300. In this drawing, a case is illustrated by way of example in which MIMO radio transmitting apparatus 300 is equipped with four transmittingantennas, of which transmitting antenna (Tx) 119 has the best transmission quality.

As shown in FIG.9, MIMO radio transmitting apparatus 300 performs diversity transmission of CW1 related control information 1 and antenna information. Also, MIMO radio transmitting apparatus 300 multiplexes control information 2-1 through 2-3 and CW1 and performs SDM transmission thereof via Txl19. Also, MIMO radio transmitting apparatus 300 performs SDM transmission of CW2-1 through CW2-3 via Tx120-1 through Tx120-3 respectively.

The processing procedure for transmitting control information in MIMO radio transmitting apparatus 300 has the same kind of basic steps as the processing procedure for transmitting control information in MIMO radio transmitting apparatus 100. The flowchart shown in FIG.5 will be used as a flowchart showing the control information transmission processing procedure in MIMO radio transmitting apparatus 300, and a detailed description thereof will be omitted. In the processing procedure for transmitting control information in MIMO radio transmitting apparatus 300, the number of transmit data differs from the processing procedure for transmitting control information in MIMO radio transmitting apparatus 100, and the number of times loop processing comprising ST1040 through ST1080 is executed differs accordingly. Also, inST1070, whereasMIMOradio transmitting apparatus 100 multiplexes control information corresponding to one transmitting antenna other than the control information transmitting antenna, and transmit data corresponding to the control information transmitting antenna, MIMO radio transmitting apparatus 300 multiplexes N control information items corresponding to N transmitting antennas other than the control information transmitting antenna, and transmit data corresponding to the control information transmitting antenna.

MIMO radio receiving apparatus 400 according to this embodiment has the same kind of basic configuration and operation as MIMO radio receiving apparatus 200 according to Embodiment 1 of the present invention. However, MIMO radio receiving apparatus 400 differs from MIMO radio receiving apparatus 200 in performing separation processing and decoding processing and obtaining N+1 receive data. The configuration and operation of MIMO radio receiving apparatus 400 can be inferred by analogy from the configuration and operation of MIMO radio receiving apparatus 200, and therefore a description thereof is omitted here.

Thus, according to this embodiment, a MIMO radio transmitting apparatus equipped with three or more transmitting antennas decides upon the transmitting antenna with the best transmission quality as a control information transmitting antenna, and using the decided control information transmitting antenna transmits all control information corresponding to the other antennas, and performs diversity transmission of control information corresponding to the control information transmitting antenna. This enables all control information to be transmitted dependably with little susceptibility to error while reducing transmit signal overhead.

According to this embodiment, all control information corresponding to transmitting antennas other than the control information transmitting antenna is encoded together, enabling both transmission and reception encoding processing to be reduced. Therefore, when CRC (Cyclic Redundancy Check) or suchlike error detection encoding is applied, collective information comprising all control information is subject to encoding processing, enabling transmit signal overhead to be further reduced and error detection accuracy to be improved.

### (Embodiment 3)

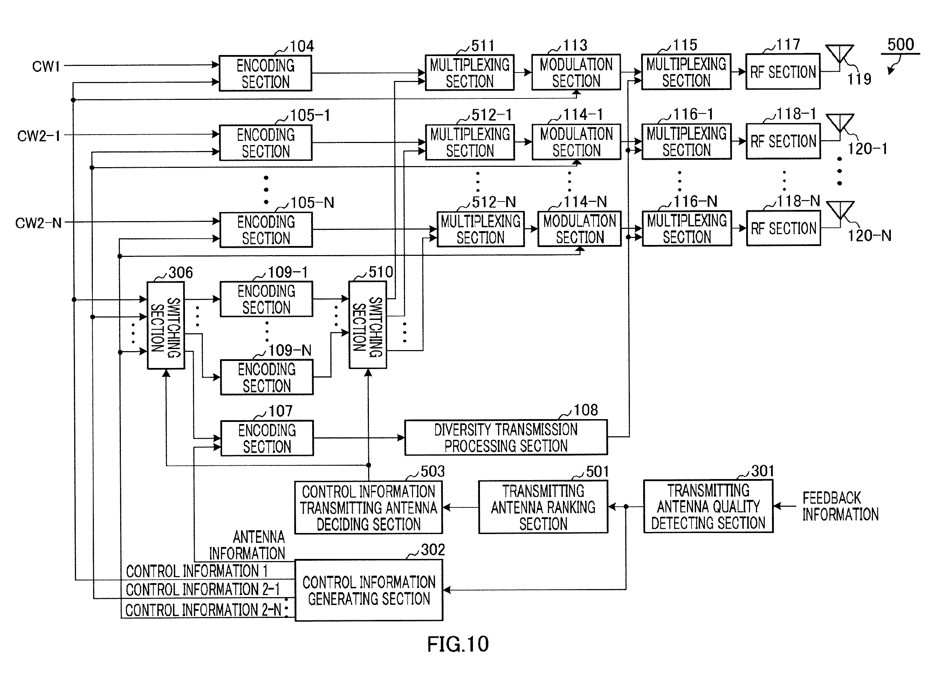

FIG.10 is a block diagram showing the main configuration of MIMO radio transmitting apparatus 500 according to Embodiment 3 of the present invention. MIMO radio transmitting apparatus 500 has the same kind of basic configuration as MIMO radio transmitting apparatus 300 according to Embodiment 2 (see FIG.8), and therefore identical configuration elements are assigned the same reference codes, and descriptions thereof are omitted.

MIMO radio transmitting apparatus 500 differs from MIMO radio transmitting apparatus 300 in being additionally equipped with transmitting antenna ranking section 501. Also, control information transmitting antenna deciding section 503, switching section 510, multiplexing section 511, and multiplexing sections 512-1 through 512-N of MIMO radio transmitting apparatus 500 have some differences in processing from control information transmitting antenna deciding section 303, switching section 310, multiplexing section 311, and multiplexing sections 112-1 through 112-N of MIMO radio transmitting apparatus 300, and are assigned different reference codes to indicate these differences.

Transmitting antenna ranking section 501 assigns rankings in descending transmission quality order to all N+1 transmitting antennas, based on the transmission quality of transmitting antenna 119 and transmitting antennas 120-1 through 120-N input from transmitting antenna quality detecting section 301, and outputs the ranking results to control information transmitting antenna deciding section 503. Here, a case will be described by way of example in which the ranking results show a descending order of transmission quality of transmitting antenna 119, transmitting antennas 120-1 through 120-N (and likewise below). In the following description, rankings may also be described as being assigned to the transmit data (CW), control information, encoding section, multiplexing section, and RF section corresponding to each transmitting antenna, using the transmitting antenna ranking results.

Control information transmitting antenna deciding section 503 decides upon one transmitting antenna having the best transmission quality (in this example, transmitting antenna 119) as a control information transmitting antenna based on the ranking results input from transmitting antenna ranking section 501, and outputs the decision result to switching section 306 and switching section 510.

Switching section 510 outputs control information (in this example, control information 2-1 through 2-N) encoded by encoding sections 109-1 through 109-N respectively to 1-ranking-higher multiplexing sections (in this example, multiplexing section 511 and multiplexing sections 512-1 through 512-(N-1)) respectively. Switching section 510 switches the above control information output destinations based on ranking results input from control information transmitting antenna deciding section 503.

Of multiplexing section 511 and multiplexing sections 512-1 through 512-N, the multiplexing sections (in this example, multiplexing section 511 and multiplexing sections 512-1 through 512-(N-1)) corresponding to N transmitting antennas in descending order of transmission quality multiplex encoded parameters (in this example, CW1 and CW2-1 through CW2-(N-1)) input from the corresponding encoding sections (in this example, encoding section 104 and encoding sections 105-1 through 105-(N-1)), and encoded parameters (in this example, control information 2-1 through 2-N encoded parameters) input from switching section 510, and output the obtained multiplex signals to the corresponding modulation sections (in this example, modulation section 113 and modulation sections 114-1 through 114-(N-1)).

Of multiplexing section 511 and multiplexing sections 512-1 through 512-N, the multiplexing section (in this example, multiplexing section 512-N) corresponding to the transmitting antenna with the poorest transmission quality outputs an encoded parameter (in this example, the CW2-N encoded parameter) input from the corresponding encoding section (in this example, encoding section 105-N) directly to the corresponding modulation section (in this example, modulation section 114-N).

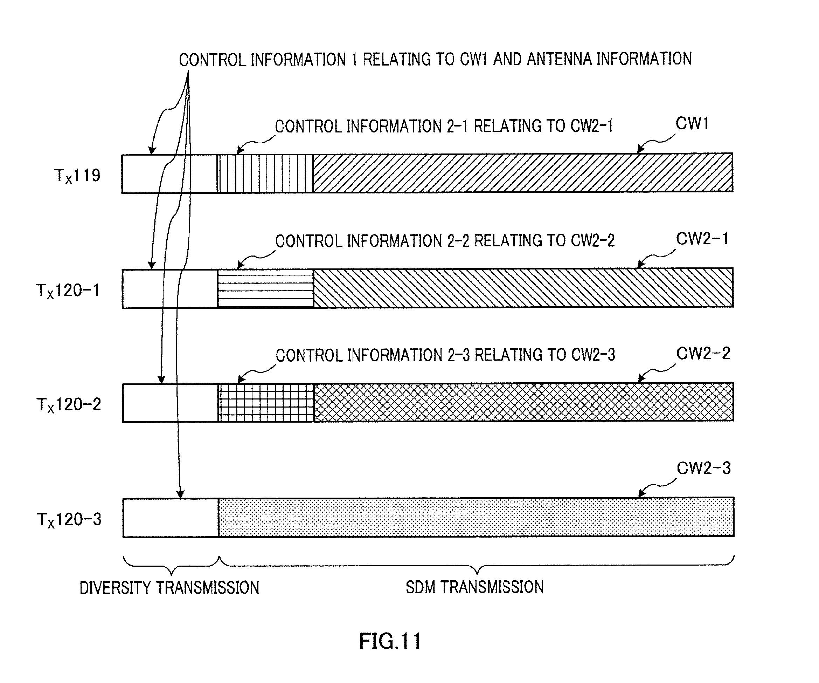

FIG.11 is a drawing for explaining the control information and transmit data transmitting method in MIMO radio transmitting apparatus 500. In this drawing, a case is illustrated by way of example in which MIMO radio transmitting apparatus 500 is equipped with four transmitting antennas, and the transmitting antenna ranking results show transmitting antennas in descending order of transmission quality to be transmitting antennas (Tx) 119, 120-1, 120-2, 120-3.

As shown in FIG.11, MIMO radio transmitting apparatus 500 performs diversity transmission of CW1 related control information 1 and antenna information. Also, MIMO radio transmitting apparatus 500 multiplexes control information 2-1 and CW1 and performs SDM transmission thereof via transmitting antenna 119, multiplexes control information 2-2 and CW2-1 and performs SDM transmission thereof via transmitting antenna 120-1, multiplexes control information 2-3 and CW2-2 and performs SDM transmission thereof via transmitting antenna 120-2,and performs SDM transmission of CW2-3 via transmitting antenna 120-3.

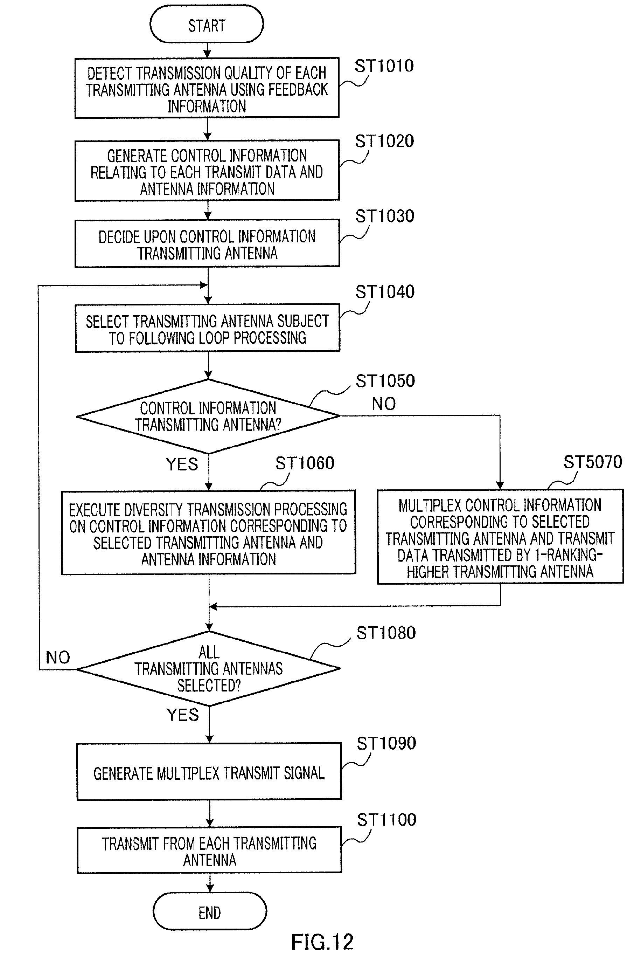

FIG.12 is a flowchart showing the processing procedure for transmitting control information in MIMO radio transmitting apparatus 500.

The processing procedure for transmitting control information in MIMO radio transmitting apparatus 500 has the same kind of basic steps as the processing procedure in MIMO radio transmitting apparatus 300 (see FIG.5), and identical steps are assigned the same reference codes.

Processing differs in part between step 5070 of the processing procedure for transmitting control information in MIMO radio transmitting apparatus 500 and step 1070 of the processing procedure for transmitting control information in MIMO radio transmitting apparatus 300, and a different reference code is assigned to indicate this difference.

Also, in MIMO radio transmitting apparatus 300, all control information corresponding to each transmitting antenna other than the control information transmitting antenna is SDM-transmitted via the control information transmitting antenna (ST1070 in FIG.5), whereas MIMO radio transmitting apparatus 500 transmits each control information corresponding to each transmitting antenna other than the control information transmitting antenna via a 1-ranking-higher transmitting antenna (ST5070). That is to say, in ST5070, multiplexing sections (in this example, multiplexing sections 512-1 through 512-N) other than the multiplexing section corresponding to the control information transmitting antenna multiplex corresponding transmit data and 1-ranking-lower control information.

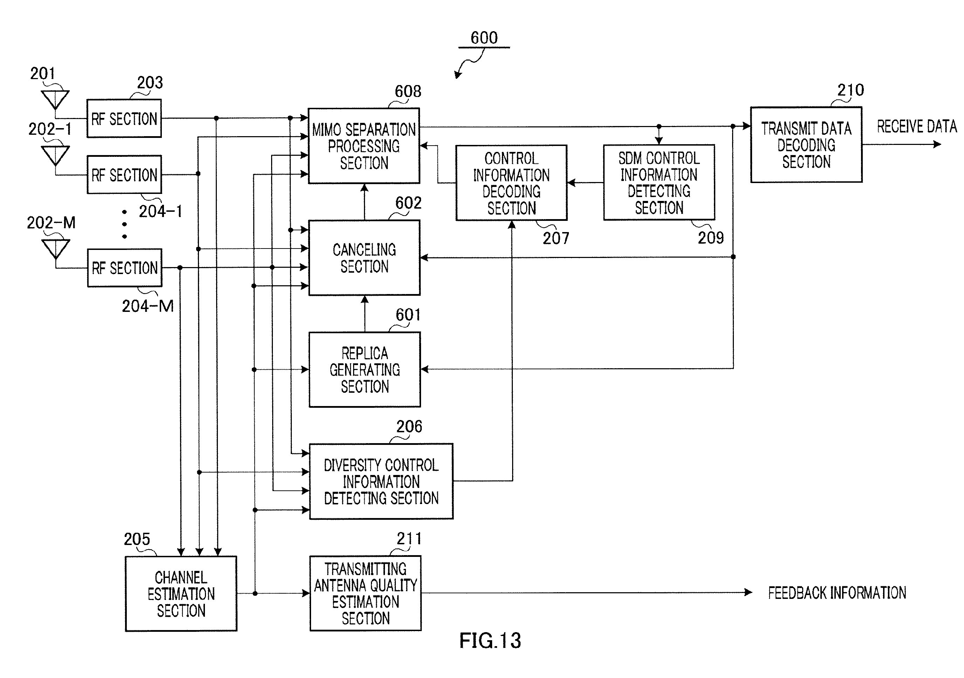

FIG.13 is a block diagram showing the main configuration of MIMO radio receiving apparatus 600 according to this embodiment. Here, a MIMO radio receiving apparatus 600 configuration is shown taking a case in which an SIC method is applied as MIMO separation processing by way of example. MIMO radio receiving apparatus 600 has the same kind of basic configuration as MIMO radio receiving apparatus 200 according to Embodiment 1 (see FIG.6), and therefore identical configuration elements are assigned the same reference codes, and descriptions thereof are omitted.

MIMO radio receiving apparatus 600 differs from MIMO radio receiving apparatus 200 in being equipped with M receiving antennas 202 and RF sections 204, designated receiving antennas 202-1 through 202-M and RF sections 204-1 through 204-M. MIMO radio receiving apparatus 600 also differs from MIMO radio receiving apparatus 200 in being additionally equipped with replica generating section 601 and canceling section 602. Also, MIMO separation processing section 608 of MIMO radio receiving apparatus 600 has somewhat different processing fromMIMO separation processing section 208 of MIMO radio receiving apparatus 200, and is assigned a different reference code to indicate this difference.

RF sections 204-1 through 204-M execute down-conversion processing on received signals input from receiving antennas 202-1 through 202-M respectively, and output the resulting signals to channel estimation section 205 and MIMO separation processing section 608.

MIMO separation processing section 608 repeats MIMO separation processing, and separates an SDM transmit signal comprising transmit data corresponding to control information obtained in the previous MIMO separation processing and control information of the next ranking from control information obtained by the previous MIMO separation processing.

Replica generating section 601 generates a cancellation replica using a channel estimate input from channel estimation section 205 and an SDM transmit signal input from MIMO separation processing section 608, and outputs this to canceling section 602.

Using the cancellation replica input from replica generating section 601, canceling section 602 cancels an SDM transmit signal obtained by MIMO separation processing inMIMO separation processing section 608 from among the received signals input from RF section 203 and RF sections 204-1 through 204-M.

Thus, according to this embodiment, a MIMO radio transmitting apparatus assigns a ranking to each transmitting antenna based on the transmission quality of each transmitting antenna, transmits control information corresponding to each transmitting antenna via a 1-ranking-higher transmitting antenna, and performs diversity transmission of control information corresponding to the highest-ranking transmitting antenna. This enables all control information to be transmitted dependably with little susceptibility to error while reducing transmit signal overhead.

Also, according to this embodiment, regions assigned to control information transmission by each transmitting antenna are equal, and a region assigned to control information transmission by the highest-ranking transmitting antenna can be decreased and the transmit data region can be increased. Thus, transmission capacity can be increased.

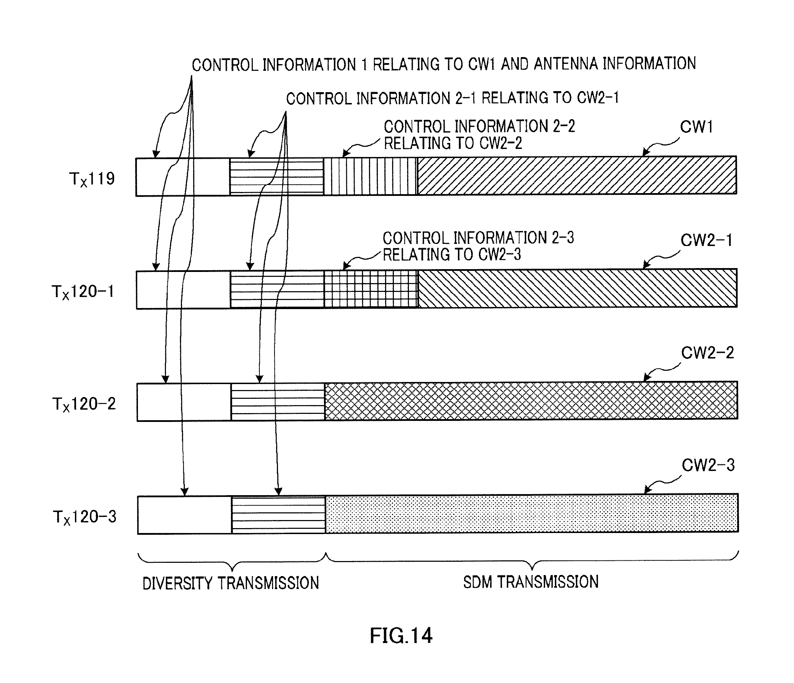

In this embodiment, a case has been described by way of example in which control information corresponding to each transmitting antenna is SDM-transmitted via a 1-ranking-higher transmitting antenna. However, information corresponding to each transmitting antenna may also be SDM-transmitted via a 2-rankings-higher transmitting antenna, as shown in FIG.14. In this case, control information corresponding to transmitting antennas with the two highest rankings is diversity-transmitted. This enables each control information to be transmitted still more dependably with less susceptibility to error.

In this embodiment, a case has been described by way of example in which each control information includes a modulation method and coding rate (MCS) of each transmit data. However, each control information may also include an MCS (Modulation and Coding Scheme) difference based on a transmitting antenna ranking. This enables the amount of control information to be reduced, and a transmit data region to be increased by the amount of that reduction. In this case, MIMO radio receiving apparatus 600 can decode and demodulate each transmit data using a transmitting antenna ranking result and differential MCS.

### (Embodiment 4)

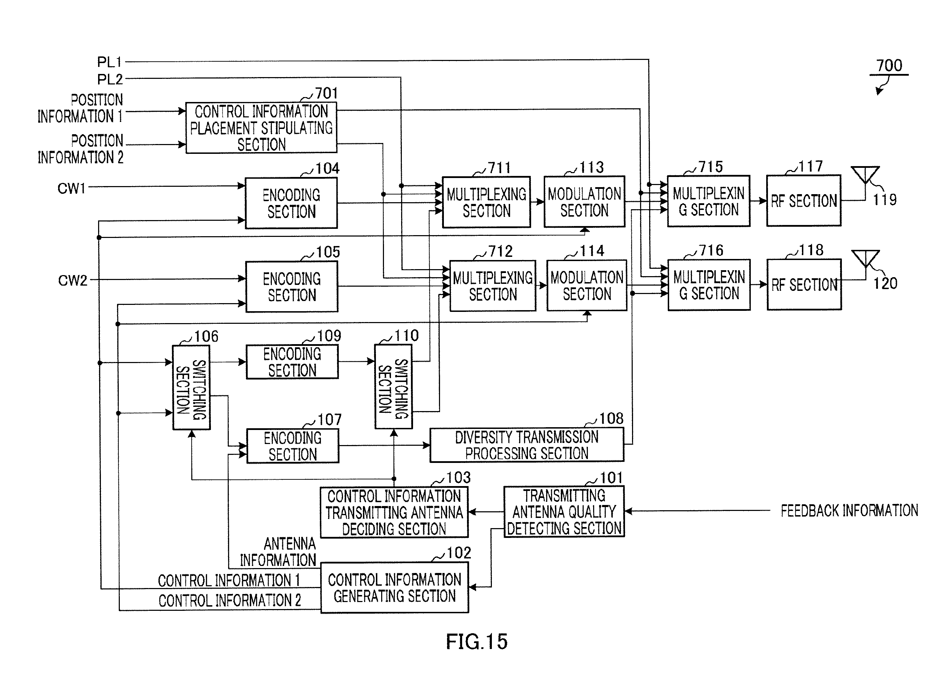

FIG.15 is a block diagram showing the main configuration of MIMO radio transmitting apparatus 700 according to Embodiment 4 of the present invention. MIMO radio transmitting apparatus 700 has the same kind of basic configuration as MIMO radio transmitting apparatus 100 according to Embodiment 1 (see FIG.1), and therefore identical configuration elements are assigned the same reference codes, and descriptions thereof are omitted.

MIMO radio transmitting apparatus 700 differs fromMIMO radio transmitting apparatus 100 in having pilot signal 1 (PL1), pilot signal 2 (PL2), position information 1, and position information 2 as input in addition to CW1 and CW2, and in being additionally equipped with control information placement stipulating section 701. Here, PL1 is a pilot signal used in MIMO radio transmitting apparatus 700 diversity transmission, and PL2 is a pilot signal used in MIMO radio transmitting apparatus 700 SDM transmission. PL1 and PL2 are transmitted placed in different positions in the same frame. It is therefore possible to track propagation path fading fluctuations. Position information 1 indicates the position of PL1 in a transmitted frame, and position information 2 indicates the position of PL2 in a transmitted frame.

Multiplexing section 711, multiplexing section 712, multiplexing section 715, and multiplexing section 716 of MIMO radio transmitting apparatus 700 have some differences in processing from multiplexing section 111, multiplexing section 112, multiplexing section 115, and multiplexing section 116 of MIMO radio transmitting apparatus 100, and are assigned different reference codes to indicate these differences.

Based on input position information 1, control information placement stipulating section 701 stipulates the placement position of control information (for example, control information 1) corresponding to the control information transmitting antenna and antenna information to multiplexing section 715 and multiplexing section 716. Also, control information placement specifying section 701 outputs the placement position of control information (in this example, control information 2) corresponding to a transmitting antenna other than the control information transmitting antenna to the multiplexing section, of multiplexing section 711 and multiplexing section 712, corresponding to the control information transmit ting antenna (in this example, multiplexing section 711). Here, a placement position is a position at which control information and antenna information are placed in a transmitted frame. Specifically, control information 1 and antenna information are placed in an adj acent position after PL1, and control information 2 is placed in an adj acent position after PL2.

Of multiplexing sections 711 and 712, the multiplexing section (in this example, multiplexing section 711) corresponding to the control information transmitting antenna (in this example, transmitting antenna 119) multiplexes, based on a placement position (in this example, the control information 2 placement position) input from control information placement stipulating section 701, a pilot signal (in this example, PL2) input from control information placement stipulating section 701, an encoded parameter (in this example, the control information 2 encoded parameter) input from switching section 110, an encoded parameter (in this example, the CW1 encoded parameter) input from the encoding section (in this example, encoding section 104) corresponding to the control information transmitting antenna, and position information of each pilot (in this example, position information 1 and position information 2), and outputs the obtained multiplex signal to the modulation section (in this example, modulation section 113) corresponding to the control information transmitting antenna.

Meanwhile, of multiplexing sections 711 and 712, the multiplexing section (in this example, multiplexing section 712) corresponding to the transmitting antenna other than the control information transmitting antenna outputs transmit data (in this example, CW2) input from the encoding section (in this example, encoding section 105) corresponding to the transmitting antenna other than the control information transmitting antenna to the modulation section (in this example, modulation section 114) corresponding to the transmitting antenna other than the control information transmitting antenna.

Based on a placement position (in this example, the control information 1 placement position) input from control information placement stipulating section 701, multiplexing sections 715 and 716 multiplex a pilot signal (in this example, PL1) input from control information placement stipulating section 701, the respective modulated signals input from modulation sections 113 and 114, a diversity transmission signal input from diversity transmission processing section 108, and also control information placement position related information, and output the obtained multiplex transmit signals to RF sections 117 and 118 respectively.

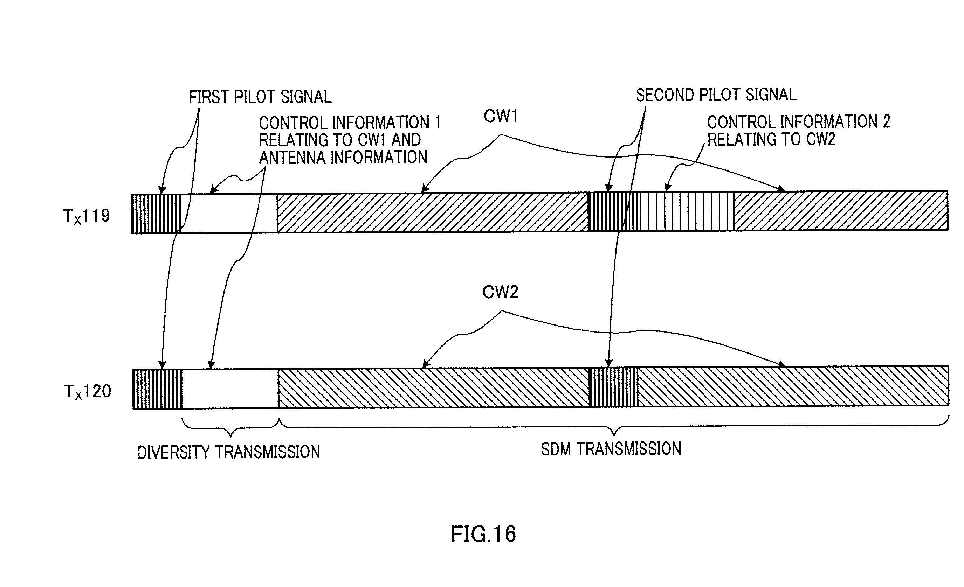

FIG.16 is a drawing for explaining the control information and transmit data transmitting method in MIMO radio transmitting apparatus 700.

As shown in FIG.16, control information (in this example, control information 1) corresponding to the control information transmitting antenna is placed after and adjacent to PL1, and control information (in this example, control information 2) corresponding to the transmitting antenna other than the control information transmitting antenna is placed after and adjacent to PL2. Here, control information 1 is information used at the start of MIMO radio receiving apparatus 800 MIMO separation processing, and is therefore transmitted temporally ahead of control information 2 together with the pilot for diversity transmission - that is, PL1.

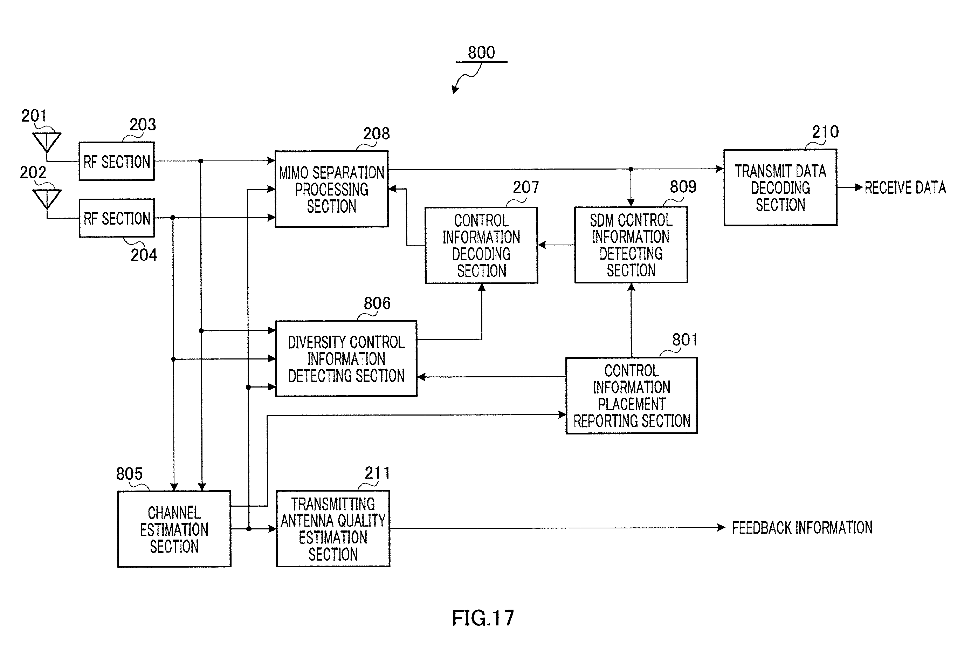

FIG.17 is a block diagram showing the main configuration of MIMO radio receiving apparatus 800. MIMO radio receiving apparatus 800 has the same kind of basic configuration as MIMO radio receiving apparatus 200 according to Embodiment 1 (see FIG.6), and therefore identical configuration elements are assigned the same reference codes, and descriptions thereof are omitted.

MIMO radio receiving apparatus 800 differs from MIMO radio receiving apparatus 200 in being additionally equipped with control information placement reporting section 801. Also, channel estimation section 805, diversity control information detecting section 806, and SDM control information detecting section 809 of MIMO radio receiving apparatus 800 have some differences in processing from channel estimation section 205, diversity control information detecting section 206, and SDM control information detecting section 209 of MIMO radio receiving apparatus 200, and are assigned different reference codes to indicate these differences.

Channel estimation section 805 performs channel estimation using received signals down-converted by RF sections 203 and 204, and obtains a channel estimate and position information for each pilot signal (in this example, position information 1 and position information 2 corresponding to PL1 and PL2). Channel estimation section 805 outputs the obtained channel estimate to diversity control information detecting section 8 06, MIMO separation processing section 208, and transmitting antenna quality estimation section 211, and outputs position information 1 and position information 2 to control information placement reporting section 801.

Based on position information 1 input from channel estimation section 805, control information placement reporting section 801 reports the placement position of diversity-transmitted control information (in this example, control information 1) and antenna information to diversity control information detecting section 806. Also, based on control information 2 input from channel estimation section 805, control information placement reporting section 801 reports the placement position of SDM-transmitted control information (in this example, control information 2) to SDM control information detecting section 809. Specifically, control information placement reporting section 801 takes a position after and adjacent to PL1 to be the control information 1 placement position, and takes a position after and adjacent to PL2 to be the control information 2 placement position.

Based on the channel estimate input from channel estimation section 805 and the placement position (in this example, the control information 1 placement position) input from control information placement reporting section 801, diversity control information detecting section 806 performs diversity reception processing - for example, STBC reception processing - on the received signals down-converted by RF sections 203 and 204, detects diversity-transmitted control information (in this example, control information 1) and antenna information, and outputs this information to control information decoding section 207.

Based on a placement position (in this example, the control information 2 placement position) input from control information placement reporting section 801, SDM control information detecting section 809 detects control information (in this example, control information 2) corresponding to the transmitting antenna other than the control information transmitting antenna from the SDM transmit signal input from MIMO separation processing section 208, and outputs this to control information decoding section 207.

Thus, according to this embodiment, control information is transmitted placed adjacent to a pilot signal with little channel estimation error, enabling control information to be transmitted more dependably with less susceptibility to error.

In this embodiment, a pattern has been described by way of example in which control information is placed after and adjacent to a pilot signal. However, the present invention is not limited to this, and a pattern may also be used in which control information is placed before and adjacent to a pilot signal, and furthermore a pattern may also be used in which control information is placed on both sides of a pilot signal. In such cases, MIMO radio transmitting apparatus 700 and MIMO radio receiving apparatus 800 decide beforehand which identical placement pattern is to be used.

In this embodiment, a case has been described by way of example in which a method whereby control information is placed adjacent to a pilot signal is applied to Embodiment 1. The same kind of placement method may also be applied to Embodiment 2 and Embodiment 3.

In this embodiment, a control information and antenna information placement pattern is set and stored beforehand in MIMO radio transmitting apparatus 700 and MIMO radio receiving apparatus 800. This enables control information to be detected by MIMO radio receiving apparatus 800 without a placement pattern being reported to MIMO radio receiving apparatus 800 from MIMO radio transmitting apparatus 700. However, the present invention is not limited to this, and a control information and antenna information placement pattern may be reported to MIMO radio receiving apparatus 800 from MIMO radio transmitting apparatus 700 instead of being set beforehand in MIMO radio transmitting apparatus 700 and MIMO radio receiving apparatus 800.

### (Embodiment 5)

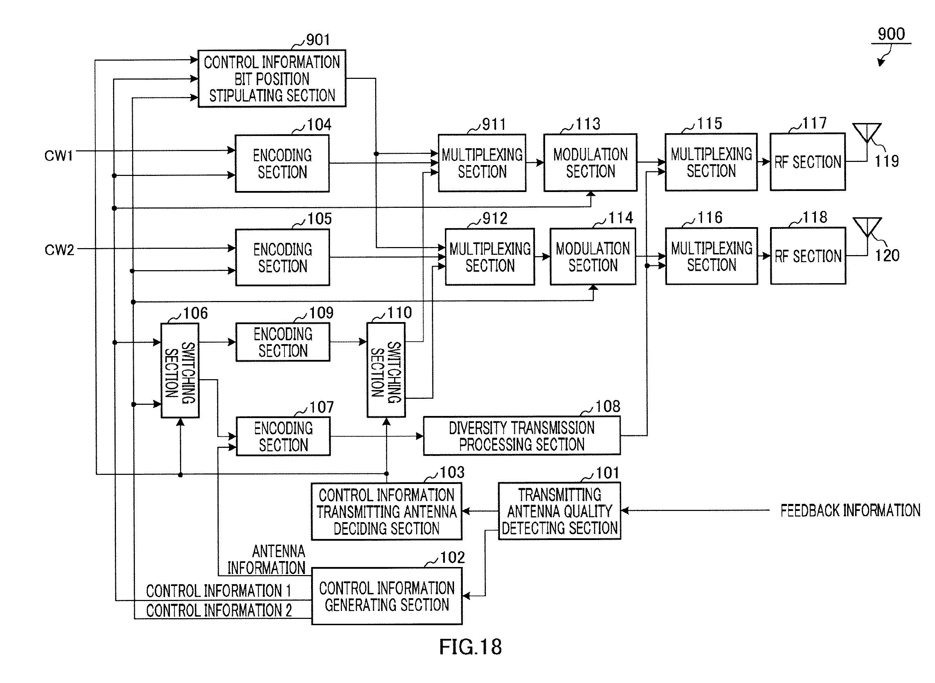

FIG.18 is a block diagram showing the main configuration of MIMO radio transmitting apparatus 900 according to Embodiment 5 of the present invention. MIMO radio transmitting apparatus 900 has the same kind of basic configuration as MIMO radio transmitting apparatus 100 according to Embodiment 1 (see FIG.3), and therefore identical configuration elements are assigned the same reference codes, and descriptions thereof are omitted. MIMO radio transmitting apparatus 900 has a configuration corresponding to a case in which M-ary modulation type modulation processing is performed by modulation sections 113 and 114.

MIMO radio transmitting apparatus 900 differs from MIMO radio transmitting apparatus 100 in being additionally equipped with control information bit position stipulating section 901. Also, multiplexing section 911 and multiplexing section 912 of MIMO radio transmitting apparatus 900 have some differences in processing from multiplexing section 111 and multiplexing section 112 of MIMO radio transmitting apparatus 100, and are assigned different reference codes to indicate these differences.

Control information bit position stipulating section 901 determines which control information, of control information 1 and control information 2, is to be SDM-transmitted based on a decoding result input from control information transmitting antenna deciding section 103. Then control information bit position stipulating section 901 stipulates a bit position at which control information to be SDM-transmitted (in this example, control information 2) is to be placed to the multiplexing section (in this example, multiplexing section 911) corresponding to the control information transmitting antenna. Specifically, in this example, control information bit position stipulating section 901 decides upon the upper bit position control information 2 placement position among the plurality of bits composing an M-ary modulation signal based on an M-ary modulation method indicated by control information 1 input from control information generating section 102 - that is, the modulation method of CW1 and control information 2.

Of multiplexing sections 911 and 912, the multiplexing section (in this example, multiplexing section 911) corresponding to the control information transmitting antenna (in this example, transmitting antenna 119) multiplexes an encoded parameter (in this example, the control information 2 encoded parameter) input from switching section 110 and an encoded parameter (in this example, the CW1 encoded parameter) input from the encoding section (in this example, encoding section 104) corresponding to the control information transmitting antenna, and outputs the obtained multiplex signal to the modulation section (in this example, modulation section 113) corresponding to the control information transmitting antenna. Here, of multiplexing sections 911 and 912, the multiplexing section (in this example, multiplexing section 911) corresponding to the control information transmitting antenna performs the above multiplexing processing in such a way that the encoded parameter (in this example, the control information 2 encoded parameter) input from switching section 110 is placed at the control information bit position (in this example, the control information 2 bit position) input from control information bit position stipulating section 901.

Meanwhile, of multiplexing sections 911 and 912, the multiplexing section (in this example, multiplexing section 912) corresponding to the transmitting antenna other than the control information transmitting antenna outputs transmit data (in this example, the CW2 encoded parameter) input from the encoding section (in this example, encoding section 105) corresponding to the transmitting antenna other than the control information transmitting antenna directly to the modulation section (in this example, modulation section 114) corresponding to the transmitting antenna other than the control information transmitting antenna.

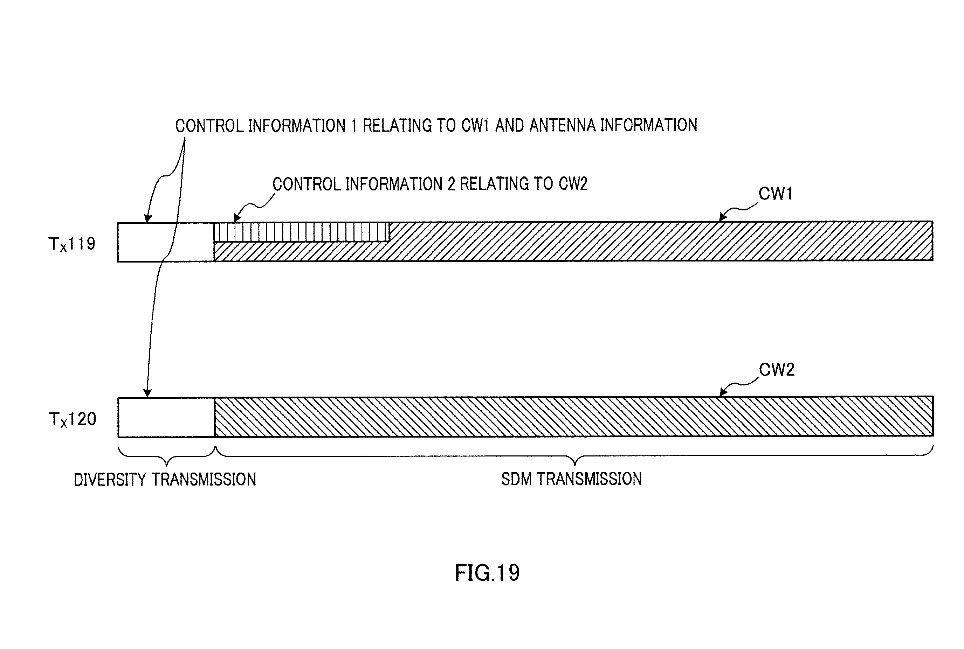

FIG.19 is a drawing for explaining the control information and transmit data transmitting method inMIMO radio transmitting apparatus 900.

This drawing illustrates a case in which an SDM transmit signal undergoes M-ary modulation. As shown in this drawing, MIMO radio transmitting apparatus 900 places control information 2 at an upper bit position of an M-ary modulation signal.

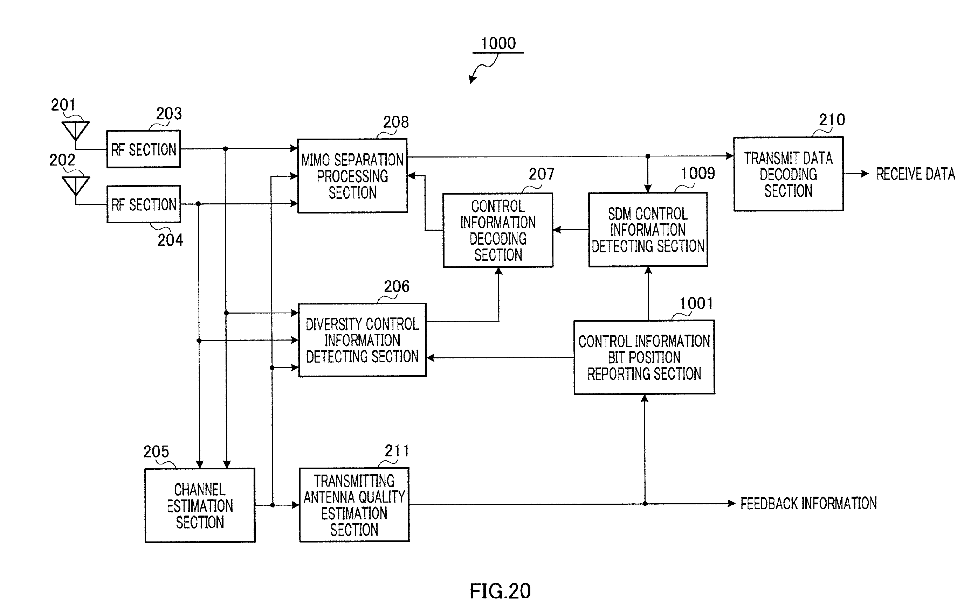

FIG.20 is a block diagram showing the main configuration of MIMO radio receiving apparatus 1000. MIMO radio receiving apparatus 1000 has the same kind of basic configuration as MIMO radio receiving apparatus 200 according to Embodiment 1 (see FIG. 6), and therefore identical configuration elements are assigned the same reference codes, and descriptions thereof are omitted.

MIMO radio receiving apparatus 1000 differs from MIMO radio receiving apparatus 200 in being additionally equipped with control information bit position reporting section 1001. Also, SDM control information detecting section 1009 of MIMO radio receiving apparatus 1000 has somewhat different processing from SDM control information detecting section 209 of MIMO radio receiving apparatus 200, and is assigned a different reference code to indicate this difference.

Control information bit position reporting section 1001 determines a modulation method of SDM-transmitted control information (in this example, control information 2) based on transmitting antenna transmission quality detected by transmitting antenna quality estimation section 211. Then control information bit position reporting section 1001 decides upon a bit position in an SDM-transmitted control information M-ary modulation signal based on the determined modulation method, and reports this to SDM control information detecting section 1009.

Based on the control information bit position (in this example, the control information 2 bit position) input from control information bit position reporting section 1001, SDM control information detecting section 1009 detects control information (in this example, control information 2) corresponding to the transmitting antenna other than the control information transmitting antenna from the SDM transmit signal input from MIMO separation processing section 208, and outputs this to control information decoding section 207.

Thus, according to this embodiment, control information is SDM-transmitted placed in an upper bit less susceptible to error than a lower bit in an M-ary modulation signal obtained by M-ary modulation, enabling control information to be transmitted more dependably with less susceptibility to error.

In this embodiment, a case has been described by way of example in which a method whereby control information is placed at an upper bit position of an M-ary modulation signal is applied to Embodiment 1. Such a placement method may also be applied to Embodiment 2 and Embodiment 3.

### (Embodiment 6)

In Embodiment 6 of the present invention, a case is described in which Embodiment 4 of the present invention is applied in a radio communication system in which communication is performed by means of a multicarrier transmission method such as OFDM.

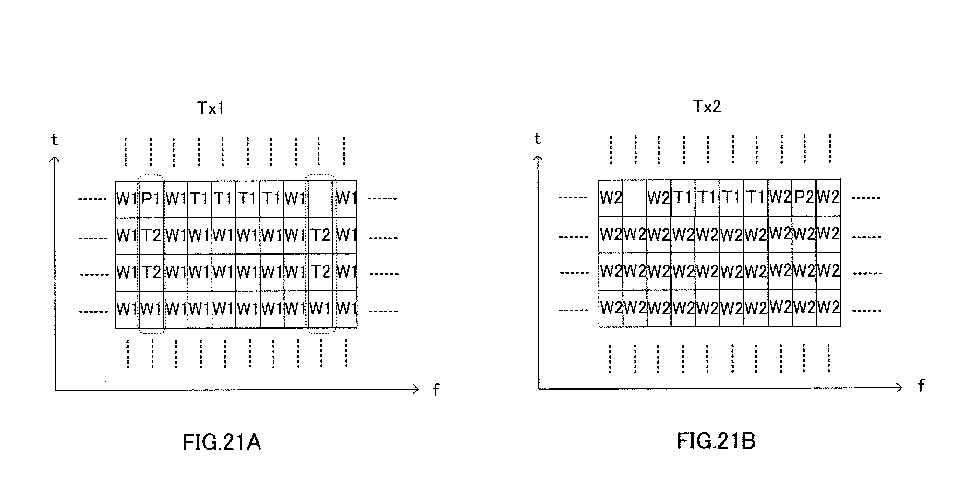

FIG.21 is a drawing for explaining a control information and transmit data transmitting method according to this embodiment. Here, a case will be described by way of example in which control information and transmit data are transmitted by means of a multicarrier transmission method such as OFDM, using two transmitting antennas. A case will be described by way of example in which the transmission quality of transmitting antenna 1 (Tx1) is better than that of transmitting antenna 2 (Tx2), and transmitting antenna 1 (Tx1) is the control information transmitting antenna.

In FIG.21, the horizontal axis is the frequency axis (f), the vertical axis is the time axis (t), and each box represents an OFDM communication subcarrier. FIG. 21A is a drawing showing a placement pattern of control information 1/antenna information (T1), control information 2 (T2), transmit data CW1 (W1), and transmitting antenna 1 pilot signal PL1 (P1) in transmitting antenna 1 subcarriers. FIG.21B is a drawing showing a placement pattern of control information 1/antenna information (T1), transmit data CW2 (W2), and transmitting antenna 2 pilot signal PL2 (P2) in transmitting antenna 2 subcarriers. Here, if it is assumed that pilot signal PL of each transmitting antenna is transmitted by frequency division multiplex transmission, at a place at which pilot signal PL is transmitted from a transmitting antenna nothing is transmitted from the other antenna. That is to say, a symbol in which a pilot for the other transmitting antenna is transmitted is a null symbol in which nothing is transmitted by this antenna. As shown in FIG.21, in this embodiment, transmitting antenna 1 performs SDM transmission of CW1 and transmitting antenna 2 performs SDM transmission of CW2. Transmitting antenna 1 and transmitting antenna 2 transmit control information 1 and antenna information with little susceptibility to error by performing diversity transmission of control information 1. As shown in FIG.21A, Tx1, which is the control information transmitting antenna, places control information 2 (T2) on subcarriers of the same frequencies as subcarriers on which PL1 and PL2 are placed. In a subcarrier on which PL1 is placed the Tx1 channel estimation accuracy is high, and therefore a more highly accurate beam can be directed for a signal transmitted by Tx1. Also, in a subcarrier on which PL2 is placed the Tx2 channel estimation accuracy is high, and therefore a signal transmitted by Tx2 can be eliminated with greater accuracy. That is to say, Tx1 transmits control information 2 with little susceptibility to error by performing SDM transmission of control information 2 (T2) placed on a subcarrier with higher channel estimation accuracy.

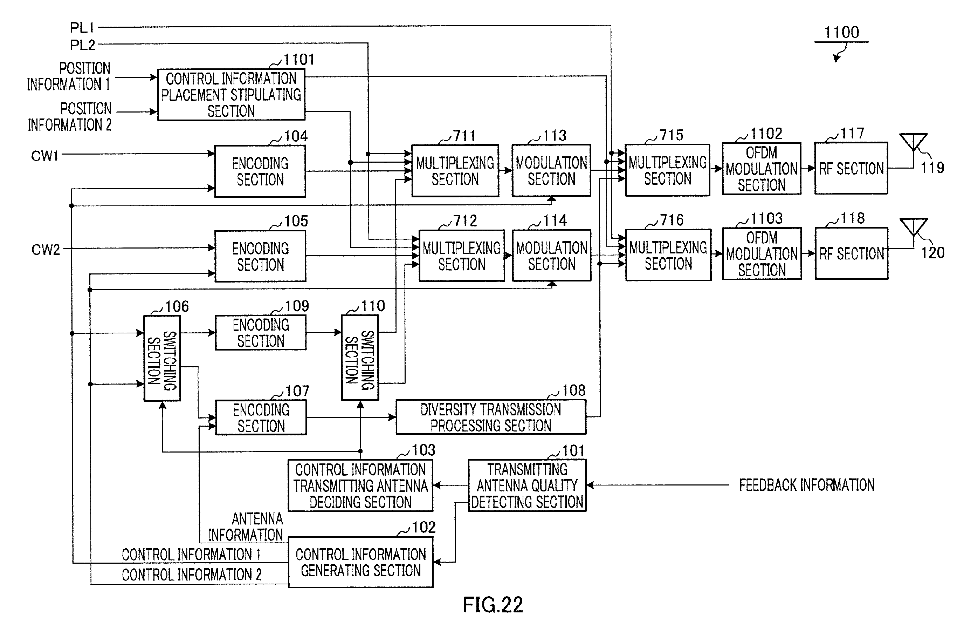

FIG.22 is a block diagram showing the main configuration of MIMO radio transmitting apparatus 1100 according to this embodiment.

MIMO radio transmitting apparatus 1100 has the same kind of basic configuration as MIMO radio transmitting apparatus 700 according to Embodiment 4 (see FIG.15), and therefore identical configuration elements are assigned the same reference codes, and descriptions thereof are omitted. MIMO radio transmitting apparatus 1100 differs from MIMO radio transmitting apparatus 700 in being additionally equipped with OFDM modulation sections 1102 and 1103. Also, control information placement stipulating section 1101 of MIMO radio transmitting apparatus 1100 has somewhat different processing from control information placement stipulating section 701 of MIMO radio transmitting apparatus 700, and is assigned a different reference code to indicate this difference.

Based on input position information 1, control information placement stipulating section 1101 stipulates a placement position of control information (for example, control information 1) corresponding to the control information transmitting antenna and antenna information to multiplexing section 715 and multiplexing section 716. Also, control information placement specifying section 1101 outputs a placement position of control information (in this example, control information 2) corresponding to a transmitting antenna other than the control information transmitting antenna to the multiplexing section, of multiplexing section 711 and multiplexing section 712, corresponding to the control information transmitting antenna (in this example, multiplexing section 711). Here, control information placement positions are as shown in FIG.21.

OFDM modulation sections 1102 and 1103 perform OFDM modulation processing using multiplex transmit signals input from multiplexing sections 715 and 716 respectively, and output the obtained OFDM modulation signals to RF sections 117 and 118 respectively.

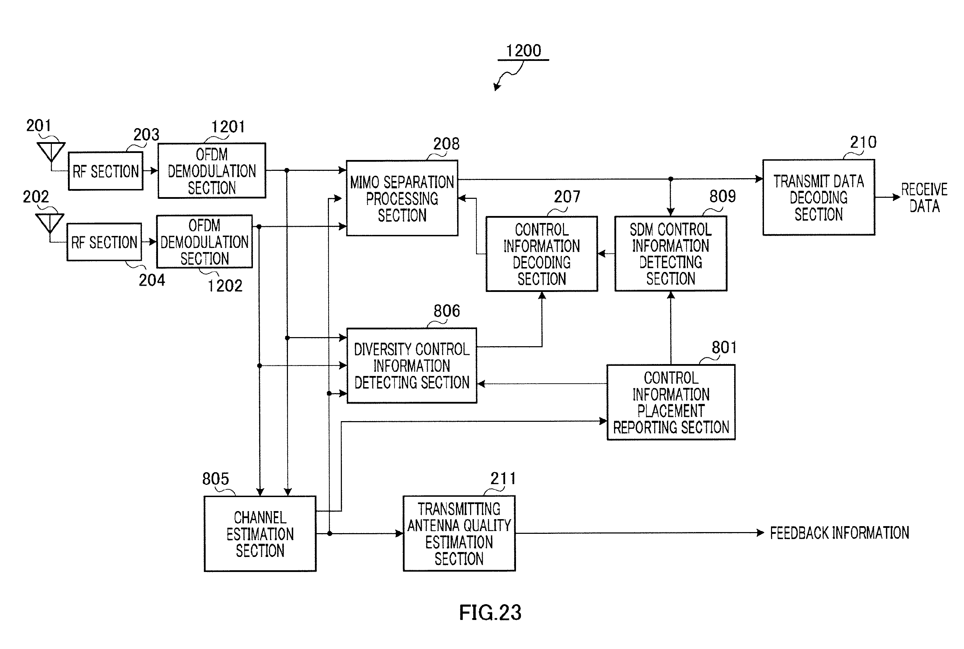

FIG.23 is a block diagram showing the main configuration of MIMO radio receiving apparatus 1200 according to this embodiment.

MIMO radio receiving apparatus 1200 has the same kind of basic configuration as MIMO radio receiving apparatus 800 according to Embodiment 4 (see FIG.17), and therefore identical configuration elements are assigned the same reference codes, and descriptions thereof are omitted. MIMO radio receiving apparatus 1200 differs from MIMO radio receiving apparatus 800 in being additionally equipped with OFDM demodulation sections 1201 and 1202.

OFDM demodulation sections 1201 and 1202 execute OFDM demodulation processing on received signals input from RF sections 203 and 204 respectively, and output the demodulated signals to channel estimation section 805, MIMO separation processing section 208, and diversity control information detecting section 806.

Thus, according to this embodiment, a MIMO radio transmitting apparatus that performs communication by means of OFDM transmits control information placed on a subcarrier of the same frequency as a subcarrier on which a pilot signal with little channel estimation error is placed, enabling control information to be transmitted more dependably with less susceptibility to error.

In this embodiment, a case has been described by way of example in which diversity-transmitted control information (in this example, control information 1) is placed not adjacent to a pilot signal, as shown in FIG.21. However, the present invention is not limited to this, and diversity-transmitted control information may also be placed adjacent to a pilot signal. Diversity-transmitted control information can be transmitted with still less susceptibility to error.

In this embodiment, a case has been described by way of example in which SDM-transmitted control information (in this example, control information 2) is placed on a subcarrier of the same frequency as a subcarrier on which a pilot signal is placed. However, the present invention is not limited to this, and SDM-transmitted control information may also be placed on a subcarrier within a predetermined distance from a subcarrier on which a pilot signal is placed.

### (Embodiment 7)

In Embodiment 7 of the present invention, a case is described in which Embodiment 6 of the present invention is applied to a MIMO radio communication system in which OFDM communication is performed and SFBC (Space frequency block coding) diversity transmission is performed.

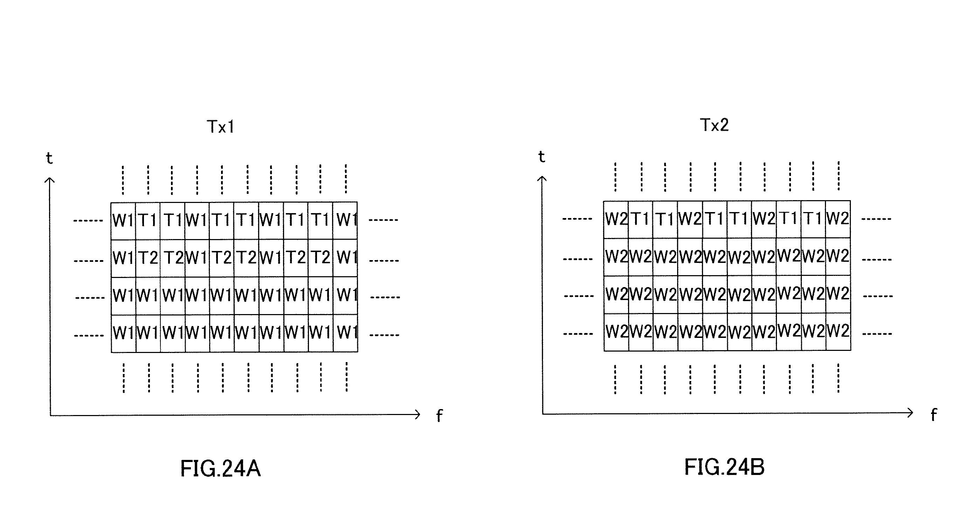

FIG.24 is a drawing for explaining a control information and transmit data transmitting method according to this embodiment. Here, a case will be described by way of example in which the transmission quality of transmitting antenna 1 (Tx1) is better than that of transmitting antenna 2 (Tx2), and transmitting antenna 1 (Tx1) is the control information transmitting antenna.

FIG.24A is a drawing showing a placement pattern of control information 1 and antenna information (T1), control information 2 (T2), and transmit data CW1 (W1) in transmitting antenna 1 OFDM subcarriers. FIG.24B is a drawing showing a placement pattern of control information 1 and antenna information (T1) and transmit data CW2 (W2) in transmitting antenna 2 OFDM subcarriers.

In SFBC diversity transmission, a transmission diversity effect is obtained by performing block encoding using adjacent subcarriers. As shown in FIG.24A, in this embodiment, control information 1 corresponding to control information transmitting antenna Tx1 is transmitted by SFBC diversity transmission. In a radio receiving apparatus according to this embodiment, SFBC-diverslty-transmitted control information 1 can be demodulated with a high degree of accuracy, and demodulated control information 1 can be regarded as a pseudo-pilot and used for channel estimation. By this means, control information 1 is transmitted with little susceptibility to error, and channel estimation accuracy is improved. As shown in FIG.24A, in this embodiment, control information 2 is transmitted with little susceptibility to error by performing SDM transmission of control information 2 placed on subcarriers of the same frequencies as subcarriers on which control information 1 is placed. Transmitting antenna 1 performs SDM transmission of CW1 and transmitting antenna 2 performs SDM transmission of CW2.

AMIMO radio transmitting apparatus andMIMO radio receiving apparatus according to this embodiment have basically the same kind of configurations as MIMO radio transmitting apparatus 1100 (see FIG.22) and MIMO radio receiving apparatus 1200 (see FIG.23) according to Embodiment 6 of the present invention, and differ only with respect to diversity transmission methods and placement patterns, and therefore detailed descriptions thereof are omitted here.

Thus, according to this embodiment, a MIMO radio transmitting apparatus that performs communication by means of OFDM decides upon a transmitting antenna with better transmission quality as a control information transmitting antenna, performs SFBC diversity transmission of control information corresponding to the control information transmitting antenna, and performs SDM transmission of control information corresponding to the transmitting antenna other than the control information transmitting antenna placed on a subcarrier of the same frequency as a subcarrier on which control information corresponding to the control information transmitting antenna is placed. This enables all control information to be transmitted dependably with little susceptibility to error while reducing transmit signal overhead.

### (Embodiment 8)

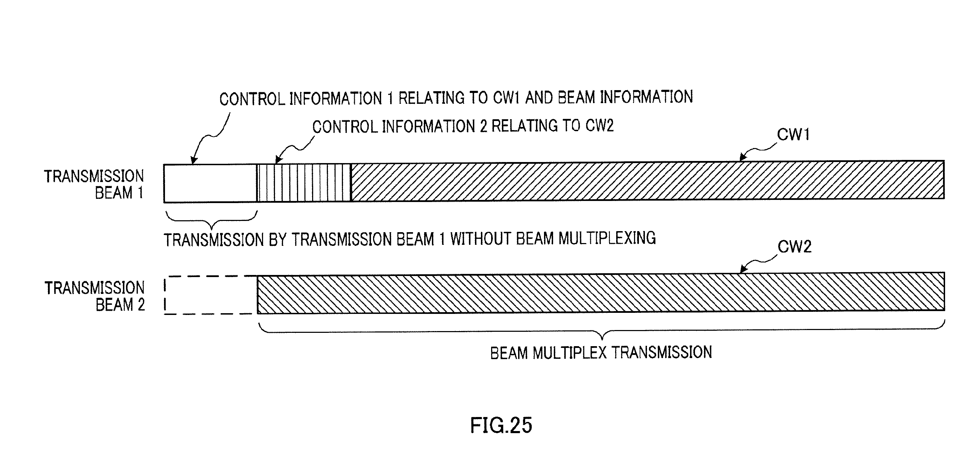

FIG.25 is a drawing for explaining a control information and transmit data transmitting method according to Embodiment 8 of the present invention.

In this embodiment, transmit data is beam-multiplexed and transmitted. Control information relating to transmit data corresponding to a transmission beam with better transmission quality and beam information relating to a transmission beam are transmitted using a transmission beam with better transmission quality without being beam-multiplexed. On the other hand, control information relating to transmit data corresponding to a transmission beam with poorer transmission quality is beam-multiplexed and transmitted. For example, as shown in FIG.25, CW1 andCW2 are transmitted by beam multiplex transmission by means of transmission beam 1 and transmission beam 2 respectively. As shown in FIG.25, when the transmission quality of transmission beam 1 is better than that of transmission beam 2, control information 1 relating to CW1 and beam information relating to transmission beams 1 and 2 are transmitted using transmission beam 1 without being be am-multiplexed, and control information 2 relating to CW2 is beam-multiplexed and transmitted.

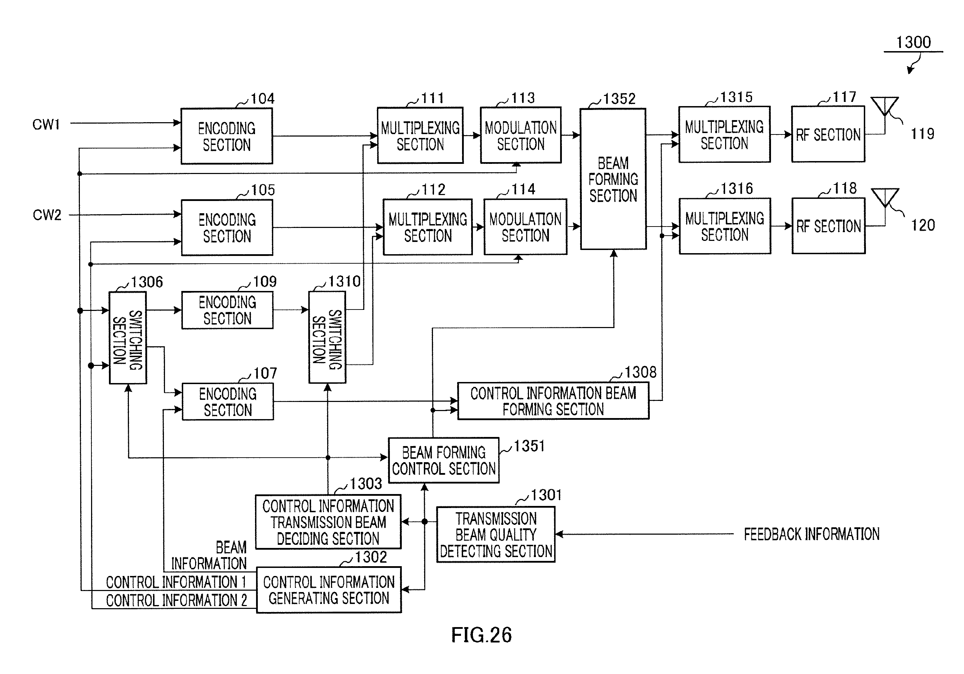

FIG.26 is a block diagram showing the main configuration of MIMO radio transmitting apparatus 1300 according to Embodiment 8 of the present invention. MIMO radio transmitting apparatus 1300 has the same kind of basic configuration as MIMO radio transmitting apparatus 100 according to Embodiment 1 (see FIG.3), and therefore identical configuration elements are assigned the same reference codes, and descriptions thereof are omitted. MIMO radio transmitting apparatus 1300 differs from MIMO radio transmitting apparatus 100 in being equipped with transmission beam quality detecting section 1301, control information generating section 1302, control information transmission beam deciding section 1303, control information beam forming section 1308, multiplexing sections 1315 and 1316, and switching sections 1306 and 1310, instead of transmitting antenna quality detecting section 101, control information generating section 102, control information transmitting antenna deciding section 103, diversity transmission processing section 108, multiplexing sections 115 and 116, and switching sections 106 and 110, and in having beam forming control section 1351 and beam forming section 1352.

MIMO radio transmitting apparatus 1300 also differs from MIMO radio transmitting apparatus 100 according to Embodiment 1 in that CW1, encoding section 104, multiplexing section 111, modulation section 113, multiplexing section 1315, and RF section 117 of MIMO radio transmitting apparatus 1300 correspond not to transmitting antenna 119 but to transmission beam 1, and CW2, encoding section 105, multiplexing section 112, modulation section 114, multiplexing section 1316, and RF section 118 correspond not to transmitting antenna 120 but to transmission beam 2. Also, a multiplex signal output from multiplexing section 111 to modulation section 113 of MIMO radio transmitting apparatus 1300 is not an SDM transmit signal SDM-transmitted via transmitting antenna 119, but a beam multiplex transmit signal beam-multiplex-transmitted via transmission beam 1. Furthermore, a multiplex signal output from multiplexing section 112 to modulation section 114 of MIMO radio transmitting apparatus 1300 is not an SDM transmit signal SDM-transmitted via transmitting antenna 120, but a beam multiplex transmit signal beam-multiplex-transmitted via transmission beam 2.

Transmission beam quality detecting section 1301 detects the transmission quality of transmission beam 1 and transmission beam 2 based on information such as a CQI fed back from MIMO radio receiving apparatus 1400 described later herein, and outputs this transmission quality information to control information generating section 1302, control information transmission beam deciding section 1303, and beam forming control section 1351.

Control information generating section 1302 decides upon a modulation method and coding rate for CW1 based on the transmission quality of transmission beam 1 input from transmission beam quality detecting section 1301, generates control information 1 including information relating to the decided modulation method and coding rate, and outputs this control information 1 to encoding section 104, modulation section 113, and switching section 1306. Control information generating section 1302 also decides upon a modulation method and coding rate for CW2 based on the transmission quality of transmission beam 2 input from transmission beam quality detecting section 1301, generates control information 2 including information relating to the decided modulation method and coding rate, and outputs this control information 2 to encoding section 105, modulation section 114, and switching section 1306. Below, control information 1 is also referred to as control information corresponding to transmission beam 1, and control information 2 is also referred to as control information corresponding to transmission beam 2. Control information generating section 1302 also generates beam information relating to transmission beam 1 and transmission beam 2, and outputs this information to encoding section 107.

Control information transmission beam deciding section 1303 decides upon the transmission beam with better transmission quality and capable of error-free beam multiplex transmission of control information corresponding to the other transmission beam as a control information transmission beam based on transmission beam 1 and transmission beam 2 transmission quality input from transmission beam quality detecting section 1301, and outputs the decision result to switching section 1306 and switching section 1310. In the following description, a case will be described by way of example in which transmission beam 1 is decided upon as the control information transmission beam.

Using the transmission beam 1 and transmission beam 2 transmission quality input from transmission beam quality detecting section 1301 and the decoding result input from control information transmission beam deciding section 1303, beam forming control section 1351 generates transmission weights by which CW1, CW2, control information 1, beam information, and control information 2 are to be multiplied, and outputs beam forming control information including these transmission weights to control information beam forming section 1308 and beam forming section 1352. Beam forming control section 1351 controls beam formation by generating these transmission weights, control information 1 is transmitted using the transmission beam (in this example, transmission beam 1) with better transmission quality without being beam-multiplexed, and control information 2 is beam-multiplex-transmitted.

Of control information 1 and control information 2, switching section 1306 outputs control information (in this example, control information 1) corresponding to the control information transmission beam (in this example, transmission beam 1) to encoding section 107, and outputs control information (in this example, control information 2) corresponding to the transmission beam other than the control information transmission beam (in this example, transmission beam 2) to encoding section 109.

Based on beam forming control information input from beam forming control section 1351, control information beam forming section 1308 multiplies encoded parameters (in this example, control information 1 and beam information encoded parameters) input from encoding section 107 by a transmission weight, and outputs the result to multiplexing section 1315.

Switching section 1310 outputs an encoded parameter input from encoding section 109 (in this example, a control information 2 encoded parameter) to the multiplexing section, of multiplexing section 111 and multiplexing section 112, corresponding to the control information transmission beam (in this example, multiplexing section 111). Switching section 1310 switches the above output destination based on a decision result input from control information transmission beam deciding section 1303.

Based on beam forming control information input from beam forming control section 1351, beam forming section 1352 multiplies modulated signals input from modulation sections 113 and 114 by a transmission weight and forms data beam 1 and data beam 2, and outputs these to multiplexing sections 1315 and 1316 respectively.

Of multiplexing sections 1315 and 1316, the multiplexing section (in this example, multiplexing section 1315) corresponding to the control information transmission beam (in this example, transmission beam 1) multiplexes a data beam (in this example, data beam 1) input from beam forming section 1352 and a control information beam (in this example, control information 1 multiplied by a transmission weight and a beam information encoded parameter) and beam information input from control information beam forming section 1308 and generates transmission beam 1, and outputs this to the corresponding RF section (in this example, RF section 117).

Meanwhile, of multiplexing sections 1315 and 1316, the multiplexing section (in this example, multiplexing section 1316) corresponding to the transmission beam (in this example, transmission beam 2) other than the control information transmission beam outputs a data beam (in this example, data beam 2) corresponding to the transmission beam other than the control information transmission beam directly to the corresponding RF section (in this example, RF section 118) as transmission beam 2.

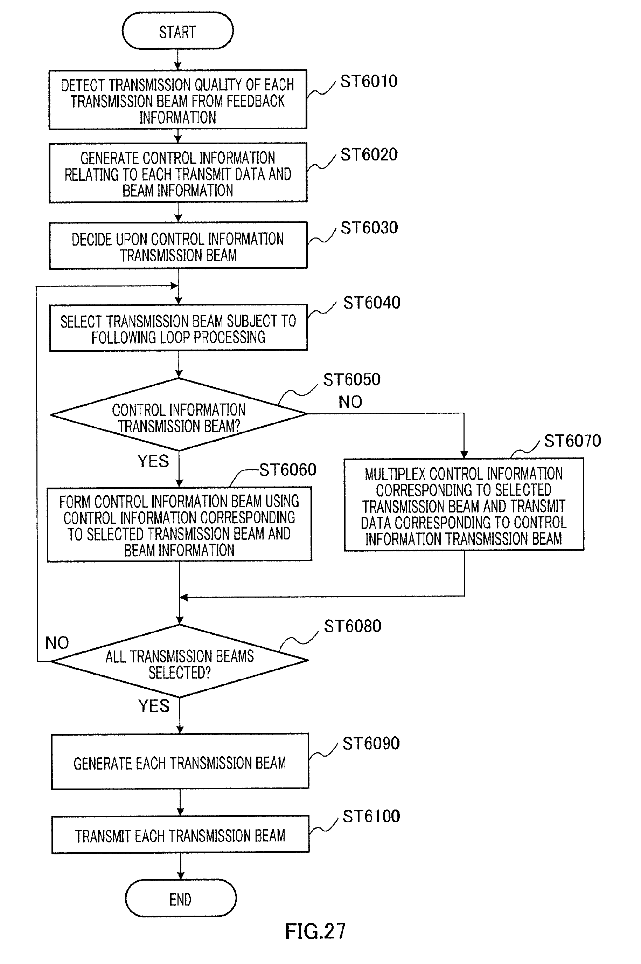

FIG.27 is a flowchart showing the processing procedure for transmitting control information in MIMO radio transmitting apparatus 1300.

First, transmission beam quality detecting section 1301 detects the transmission quality of transmission beam 1 and transmission beam 2 based on information such as a CQI fed back from MIMO radio receiving apparatus 1400 (ST6010).

Next, control information generating section 1302 decides upon a modulation method and coding rate for CW1 and CW2 based on the transmission quality of transmission beam 1 and transmission beam 2 detected by transmission beam quality detecting section 1301. Then control information generating section 1302 generates control information 1 including information relating to the modulation method and coding rate for CW1, control information 2 including information relating to the modulation method and coding rate for CW2, and beam information relating to transmission beam 1 and transmission beam 2 (ST6020).

Next, based on the transmission quality of transmission beam 1 and transmission beam 2 detected by transmission beam quality detecting section 1301, control information transmission beam deciding section 1303 decides upon the transmission beam with the better transmission quality (in this example, transmission beam 1) as a control information transmission beam (ST6030).

Then MIMO radio transmitting apparatus 1300 selects a transmission beam to be subjected to loop processing comprising ST6040 through ST6080. As an initial value, transmission beam 1 is subjected to the loop processing comprising ST6040 through ST6080. In each loop, MIMO radio transmitting apparatus 1300 selects the next transmission beam after the transmission beam selected the previous time, and makes that transmission beam subject to processing (ST6040).

Next, MIMO radio transmitting apparatus 1300 determines whether or not the transmission beam subject to processing is the control information transmission beam (ST6050).

If the transmission beam subject to processing (for example, transmission beam 1) is determined to be the control information transmission beam (ST6050: YES), control information beam forming section 1308 forms a control information beam using control information corresponding to the control information transmission beam (in this example, control information 1) (ST6060).

If the transmission beam subject to processing (for example, transmission beam 2) is determined not to be the control information transmission beam (in this example, transmission beam 1) (ST6050: NO), a modulation section (in this example, multiplexing section 111) corresponding to the control information transmission beam multiplexes control information (in this example, control information 2) corresponding to a transmission beam other than the control information transmission beam and transmit data (in this example, CW1) corresponding to the control information transmission beam and generates a beam multiplex transmit signal, and beam forming section 1352 generates data beam 1 and data beam 2 (ST6070).

Next, MIMO radio transmitting apparatus 1300 determines whether or not all the transmission beams have been selected as subject to processing (ST6080). If it is determined that all the transmission beams have not been selected as subject to processing (ST6080: NO), the processing procedure returns to ST6040. On the other hand, if it is determined that all the transmission beams have been selected as subject to processing (ST6080: YES), the processing procedure proceeds to ST6090.

Then multiplexing section 1315 and multiplexing section 1316 multiplex the control information beam generated in ST6060 and data beam 1 and data beam 2 generated in ST6070, and generate transmission beam 1 and transmission beam 2 (ST6090).

Next, transmission beam 1 and transmission beam 2 are transmitted (ST6100).

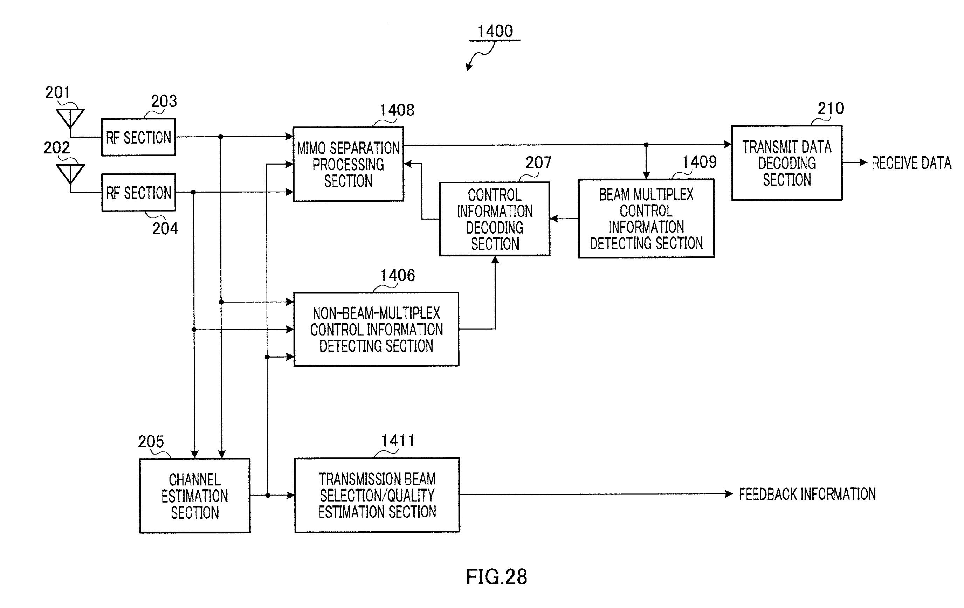

FIG.28 is a block diagram showing the main configuration of MIMO radio receiving apparatus 1400 according to this embodiment.

MIMO radio receiving apparatus 1400 has the same kind of basic configuration as MIMO radio receiving apparatus 200 according to Embodiment 1 (see FIG. 6), and therefore identical configuration elements are assigned the same reference codes, and descriptions thereof are omitted. MIMO radio receiving apparatus 1400 differs fromMIMO radio receiving apparatus 200 in being equipped with non-beam-multiplex control information detecting section 1406, beam multiplex control information detecting section 1409, and transmission beam selection/qualzty estimation section 1411 instead of diversity control information detecting section 206, SDM control information detecting section 209, and transmitting antenna quality estimation section 211. Also, MIMO separation processing section 1408 of MIMO radio receiving apparatus 1400 has somewhat different processing from MIMO separation processing section 208 of MIMO radio receiving apparatus 200, and is assigned a different reference code to indicate this difference.

Based on a channel estimate input from channel estimation section 205, non-beam-multiplex control information detecting section 1406 detects control information (in this example, control information 1) transmitted without being beam-multiplexed and beam information from received signals down-converted by RF sections 203 and 204, and outputs this information to control information decoding section 207.

Using the received signals down-converted by RF sections 203 and 204, the channel estimate input from channel estimation section 205, and control information (in this example, control information 1 and control information 2) and beam information input from control information decoding section 207, MIMO separation processing section 1408 separates a beam multiplex transmit signal transmitted by each transmission beam, and outputs the signals to beam multiplex control information detecting section 1409 and transmit data decoding section 210.

Beam multiplex control information detecting section 1409 detects control information (in this example, control information 2) corresponding to a transmission beam other than the control information transmission beam from a beam multiplex signal input from MIMO separation processing section 1408, and outputs this to control information decoding section 207.

Using a channel estimate input from channel estimation section 205, transmission beam selection/quality estimation section 1411 selects two beams used for transmission as transmission beam 1 and transmission beam 2 from among a plurality of beams from MIMO radio transmitting apparatus 1300, estimates the transmission quality of these two transmission beams, and feeds back information such as a CQI representing the estimation result to MIMO radio transmitting apparatus 1300.

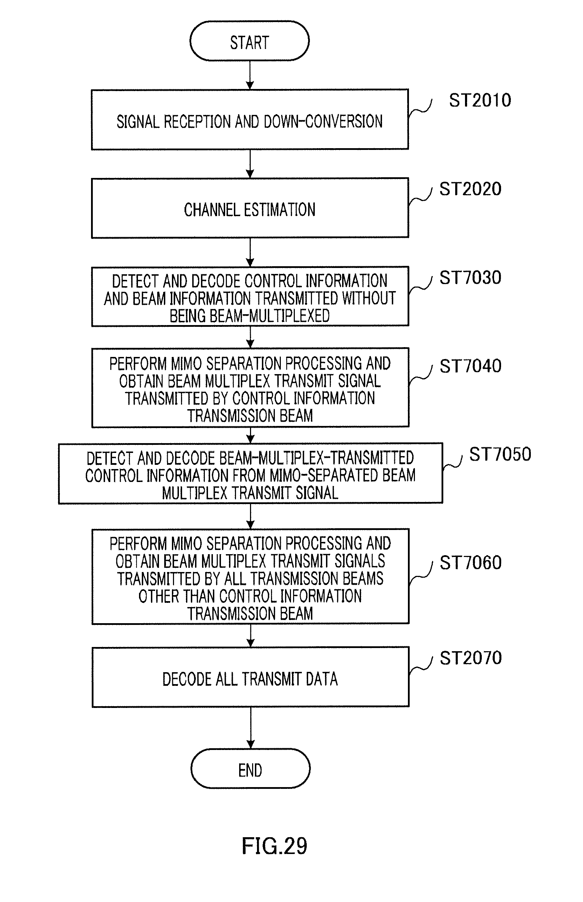

FIG.29 is a flowchart showing the processing procedure for receiving control information and transmit data in MIMO radio receiving apparatus 1400. The processing procedure shown in FIG.29 has the same kind of basic steps as the processing procedure shown in FIG.7, and therefore identical steps are assigned the same reference codes, and a description thereof is omitted. Processingdiffersin partbetweenST7030, ST7040, ST7050, and ST7060 shown in FIG.29 and ST2030, ST2040, ST2050, and ST2060 shown in FIG.7, and therefore different reference codes are assigned to indicate these differences.

In ST7030, using a channel estimate, non-beam-multiplex control information detecting section 1406 detects control information (in this example, control information 1) and beam information transmitted without being beam-multiplexed from within the down-converted received signals. The detected control information and beam information is decoded by control information decoding section 207.

In ST7040, MIMO separation processing section 1408 performs MIMO separation processing using the control information (in this example, control information 1) and beam information transmitted without being beam-multiplexed, and obtains a beam multiplex transmit signal transmitted by the control information transmission beam (in this example, transmission beam 1).

In ST7050, beam multiplex control information detecting section 1409 detects beam-multiplexed transmittedcontrolinformation (in this example, control information 2) from the beam multiplex transmit signal transmitted by the control information transmission beam (in this example, transmission beam 1), and the detected control information is decoded by control information decoding section 207.

In ST7060, MIMO separation processing section 1408 separates all beam multiplex transmit signals transmitted by a transmission beam (in this example, transmission beam 2) other than the control information transmission beam.

Thus, according to this embodiment, a MIMO radio transmitting apparatus decides upon a transmission beam with better transmission quality as a control information transmission beam, and using the decided control information transmission beam performs beam multiplex transmission of control information corresponding to another transmission beam, and transmits control information corresponding to the control information transmission beam without performing beam multiplexing. This enables all control information to be transmitted dependably with little susceptibility to error while reducing transmit signal overhead.

This concludes a description of embodiments of the present invention.

It is possible for a multiantenna radio transmitting apparatus according to the present invention to be installed in a communication terminal apparatus and base station apparatus in a MIMO mobile communication system, thereby enabling a communication terminal apparatus, base station apparatus, and mobile communication system that have the same kind of operational effects as described above to be provided.

A case has here been described by way of example in which the present invention is configured as hardware, but it is also possible for the present invention to be implemented by software. For example, the same kind of functions as those of a multiantenna radio transmitting apparatus according to the present invention can be realized by writing an algorithm of a multiantenna radio transmitting method according to the present invention in a programming language, storing this program in memory, and having it executed by an information processing means.

The function blocks used in the descriptions of the above embodiments are typically implemented as LSIs, which are integrated circuits. These may be implemented individually as single chips, or a single chip may incorporate some or all of them.

Here, the term LSI has been used, but the terms IC, system LSI, super LSI, ultra LSI, and so forth may also be used according to differences in the degree of integration.

The method of implementing integrated circuitry is not limited to LSI, and implementation by means of dedicated circuitry or a general-purpose processor may also be used. An FPGA (Field Programmable Gate Array) for which programming is possible after LSI fabrication, or a reconfigurable processor allowing reconfiguration of circuit cell connections and settings within an LSI, may also be used.

In the event of the introduction of an integrated circuit implementation technology where by LSI is replaced by a different technology as an advance in, or derivation from, semiconductor technology, integration of the function blocks may of course be performed using that technology. The application of biotechnology or the like is also a possibility.

The disclosures of Japanese Patent Application No.2006-216184, filed on August 8, 2006, and Japanese Patent Application No.2007-022032, filed on January 31, 2007, including the specifications, drawings and abstracts, are incorporated herein by reference in their entirety.

### Industrial Applicability

A multsantenna radio transmitting apparatus and multiantenna radio transmitting method according to the present invention can be applied to such uses as transmitting control information more dependably in a MIMO radio communication system.

## Claims

1. A multiantenna radio transmitting apparatus comprising:
a first antenna that performs space division multiplex transmission of first data; and
a second antenna that performs space division multiplex transmission of second data, wherein:
the first antenna has better transmission quality than the second antenna;
the first antenna performs space division multiplex transmission of second control information relating to the second data; and
at least one of the first antenna and the second antenna transmits first control information relating to the first data without performing space division multiplexing.

2. The multiantenna radio transmitting apparatus according to claim 1, wherein at least one of the first antenna and the second antenna performs diversity transmission of the first control information.

3. The multiantenna radio transmitting apparatus according to claim 1, further comprising a third antenna that performs space division multiplex transmission of third data, wherein:
the first antenna has better transmission quality than the third antenna; and
the first antenna also performs space division multiplex transmission of third control information relating to the third data.

4. The multiantenna radio transmitting apparatus according to claim 1, further comprising a third antenna that performs space division multiplex transmission of third data, wherein:
the second antenna has better transmission quality than the third antenna; and
the second antenna also performs space division multiplex transmission of third control information relating to the third data.

5. The multiantenna radio transmitting apparatus according to claim 2, further comprising a placement section that places the first control information adjacent to a first pilot used in the diversity transmission, and places the second control information adjacent to a second pilot used in the space division multiplex transmission.

6. The multiantenna radio transmitting apparatus according to claim 2, wherein the multiantenna radio transmitting apparatus uses a multicarrier transmission system, the multiantenna radio transmitting apparatus further comprising a placement section that places the second control information on a subcarrier of an identical frequency to a subcarrier on which a first pilot for the first antenna is placed and a subcarrier of an identical frequency to a subcarrier on which a second pilot for the second antenna is placed.

7. The multiantenna radio transmitting apparatus according to claim 2, wherein:
the multiantenna radio transmitting apparatus uses a multicarrier transmission system; and
the diversity transmission is of an SFBC (Space frequency block coding) type,
the multiantenna radio transmitting apparatus further comprising a placement section that places the second control information on a subcarrier of an identical frequency to a subcarrier on which the first control information is placed.

8. The multiantenna radio transmitting apparatus according to claim 1, further comprising a placement section that places the second control information in an upper bit among a plurality of bits composing an M-ary modulation signal.

9. The multiantenna radio transmitting apparatus according to claim 2, wherein the diversity transmission is of an orthogonal frequency division multiplexing type or an STBC type.

10. The multiantenna radio transmitting apparatus according to claim 1, further comprising:
a first encoding section that encodes the first data using a first coding rate;
a second encoding section that encodes the first control information using a second coding rate;
a third encoding section that encodes the second data using a third coding rate; and
a fourth encoding section that encodes the second control information using a fourth coding rate, wherein:
the second encoding section changes the second coding rate according to the first coding rate; and
the fourth encoding section changes the fourth coding rate according to the third coding rate.

11. A multiantenna radio transmitting method used in a radio transmitting apparatus comprising a first antenna that performs space division multiplexing transmission of first data and a second antenna that performs space division multiplexing transmission of second data, wherein:
the first antenna has better transmission quality than the second antenna;
second control information relating to the second data is transmitted by space division multiplex transmission from the first antenna; and
first control information relating to the first data is transmitted without space division multiplexing being performed from at least one of the first antenna and the second antenna.
